(19) Europäisches Patentamt

European Patent Office

Office européen des brevets

(11) **EP 3 595 453 B1**

(12) **EUROPEAN PATENT SPECIFICATION**

(45) Date of publication and mention
of the grant of the patent:
**25.08.2021 Bulletin 2021/34**

(51) Int Cl.:
***A22B 5/00*** *(2006.01)*   ***A22B 7/00*** *(2006.01)*

(21) Application number: **18709051.9**

(22) Date of filing: **13.03.2018**

(86) International application number:
**PCT/EP2018/056288**

(87) International publication number:
**WO 2018/167089 (20.09.2018 Gazette 2018/38)**

(54) **3D IMAGING SYSTEM AND METHOD OF IMAGING CARCASSES**

3D-ABBILDUNGSSYSTEM UND 3D-ABBILDUNGSVERFAHREN FÜR KADAVER

SYSTÈME ET PROCÉDÉ D'IMAGERIE 3D POUR CARCASSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2017 EP 17160568**

(43) Date of publication of application:
**22.01.2020 Bulletin 2020/04**

(73) Proprietor: **Frontmatec Smørum A/S
2765 Smørum (DK)**

(72) Inventors:
• **LAURIDSEN, Thomas
4200 Slagelse (DK)**
• **ESBERG, Jacob
2100 Copenhagen Ø (DK)**

(74) Representative: **Zacco Denmark A/S
Arne Jacobsens Allé 15
2300 Copenhagen S (DK)**

(56) References cited:
WO-A1-2012/029058   WO-A1-2012/029058
US-A1- 2005 128 197   US-A1- 2005 128 197
US-A1- 2016 029 648   US-A1- 2016 029 648

**Description**

In the prior art systems and methods for approximately determining the volume and many other properties of a carcass are generally known. Such prior art systems and methods are used on production lines at slaughterhouses for various purposes such as for grading carcasses on a scale, for sorting carcasses in readiness of further processing on the production line, and for controlling settings at automatic cutting machines on the production line. Such systems and methods improve automation and slaughter yield on the production lines and reduce the risk of injury to personnel working at the production line. Also, the farmer supplying the livestock to the slaughterhouse may be paid more accurately in accordance with the physical properties of the livestock.

One known procedure is, for example, to hang a carcass from a weighing system, to determine its weight and, on the basis of the weight and a scanning of the carcass or livestock, to approximate its shape and therefrom to make statements about the yield that can be expected. However, this method has the particular disadvantage that the volume and the slaughter yield to be expected can only be roughly estimated on the basis of the approximated volume. In this method, it is mostly ignored that each slaughter animal body has different expanses of tissue, meat, bone and fat tissue sections in particular, and therefore an exact statement about the most likely slaughter yield of meat of the slaughter animal body cannot be made. Also, such procedures are approximate and less useful for controlling cutting machines on the production line.

RELATED PRIOR ART

In one class of prior art systems such as described in EP 2 092 829 (Banss Schlact- und Fördertechnik), US 5 194 036 (Normaclass) and CA 2 466 289 (Tong) it is known to record a surface profile using structured light, such as a laser line, to obtain a pseudo 3D representation of carcasses.

In another class of prior art systems it is known to use camera systems, such as those using time-of-flight or depth-from-defocus, to obtain 3D information without structured light. This class of prior art is exemplified in greater detail below.

US 2016/0029648-A1 (CSB-SYSTEM AG) describes an apparatus for volumetrically measuring the body of an animal for slaughter. The apparatus has a first depth camera and a second depth camera which are so-called time-of-flight cameras. The cameras have respective recording areas (field-of-views) and are arranged opposite to one another to record respective depth images from opposing sides of the body. The apparatus has an evaluation unit connected to the depth cameras and acquires spatial coordinate data provided by the depth cameras. The spatial coordinate data from the depth cameras are combined as combined spatial coordinate data in a common spatial coordinate system. A surface model of the body of an animal for slaughter is provided from the combined spatial coordinate data, and a volume of the object in the body of an animal for slaughter is estimated from the surface model. An object of that invention is to provide a device for volumetrically measuring a slaughter animal body that allows an improved determination of the volumes of slaughter animal bodies and a reliable assessment of the slaughter yield to be expected at relatively low costs.

However, use of time-of-flight cameras involves problems related to synchronisation or alignment between image (depth) data from the time-of-flight cameras and image data recorded at visible wavelengths such as colour image data. Also time-of-flight cameras involve problems related to use in an environment with daylight or light sources that are not controlled.

US 7 399 220 B2 (Kriesel) describes a method and apparatus for measuring of the physical characteristics of livestock animals such as cattle and hogs or carcasses. A plurality of strategically positioned cameras are used to obtain data concerning volumetric, curvilinear (surface) and linear measurements of livestock animals such as cattle and hogs and the full carcasses thereof. Data from the cameras are analysed to provide information that substantially assists the commercial producer of livestock animals in producing a high-quality end-product for the consumer. Three cameras and data processing techniques are applied to achieve 3D data sets of the animal. In one embodiment the target animal is illuminated with structured light (predefined light patterns) and images are obtained from three strategic camera positions. Each of the images is then processed by a range image algorithm to obtain a three dimensional point cloud set. A processing algorithm converts the 3D data from the range camera into mesh data aligned on a rectangular grid, performs Delauney triangulation, which projects the 3D data set onto an X-Y plane and generates triangles in such a way that no data point is contained within any triangle's circumcircle, applies a mesh function to the data resulting from Delaunay triangulation, to obtain Delaunay triangles in three-dimensions, and then applies a surface function to apply a surface. Different types of camera technologies for acquiring images that can be combined to achieve the 3D data sets are described. One camera technology uses a depth-from-defocus system that employs a single visible spectrum camera, wherein at least three images are combined to establish a range map of the surface. Active stereoscopic vision systems may also be used to obtain 3D surface measurements. This technology uses two cameras separated by a distance sufficient to triangulate on a given point on the target surface. A minimum of two images are required to compute the target surface. However, as acknowledged, holes in the computed surface result when a physical surface feature of the carcass or livestock obstructs one of the camera views.

Imaging systems relying on emission of structured light involves problems related to distortions or image artefacts caused when the object to be imaged is moving. The problem escalates the faster the object is moving

US 2005/0128197 A1 describes a system for obtaining a probable 3D map of an occluded surface of an object using the knowledge that many objects posses one or more symmetries.

SUMMARY

It is realized that there is a need for more accurate and reliable methods and systems for generating volumetric and spatial property representation of carcasses which has been cut up or cut open to reveal at least a portion of an inner surface of the carcass for visual inspection from a position next to a passageway. As an example, the carcass may be a so-called half carcass resulting from cutting up a carcass such as from ovine, bovine and porcine into two half carcasses as it is known in the art. The inner surface of a carcass, such as a half-carcass, may be partially visible, but not fully visible at least from a fixed station next to the passageway at which the carcass passes. The inner surface of the carcass may comprise portions of the thoracic cavity of carcass e.g. from ovine, bovine and porcine.

Multi-view imaging requires a line-of-sight between the camera's image sensor and a region at the surface of the carcass. However, multi-view imaging, at some regions of the surface of the physical carcass, may be of poor quality or absent e.g. when the regions face a cavity or otherwise are occluded by portions of the carcass. At such regions multi-view imaging for constructing an accurate 3D model are not sufficient.

There is provided a method of imaging carcasses, comprising:

acquiring, using a first set of cameras, a first set of multi-view images from multiple positions at a first side of a passageway, and acquiring, using a second set of cameras, a second set of multi-view images from multiple positions at a second side of the passageway; wherein the multi-view images are acquired at a first point in time upon detection of a carcass being present at a predetermined position at the passageway;
computing a 3D carcass model in a 3D domain of the carcass or a portion thereof from the first set of multi-view images and the second set of multi-view images;
locating a first region of the 3D carcass model by locating an occluded or spatially sparsely represented region of the 3D carcass model; and
manipulating the 3D carcass model at least at the first region to change the volume of the 3D carcass model or the distribution of volume of the 3D carcass model in accordance with one or both of a weight registered by a load cell and a volume to weight conversion parameter and a representation of a suspension position in the 3D domain at which the carcass is suspended to generate a manipulated 3D carcass model.

Thereby, a more accurate 3D carcass model can be generated. By manipulating the 3D carcass model, computed from the first set of multi-view images and the second set of multi-view images, at least at the first region as mentioned above and described in more detail herein, the 3D carcass model computed from the first set of multi-view images and the second set of multi-view images is transformed into a 3D carcass model more accurately representing the carcass.

The first region, at which the carcass is spatially poorly represented, is subjected to spatial manipulation in accordance with one or both of a weight registered by a load cell and a volume to weight conversion parameter and a representation of a suspension position at which the carcass is suspended.

Accordingly, the spatial manipulation (also denoted manipulation) may change one or both of volume of the 3D carcass model and an estimate of the weight of the carcass subject to imaging, if computed. The spatial manipulation may change one or both of the total cubic measure of the 3D carcass model and the distribution of volume of the 3D carcass model. Spatial manipulation changing the distribution of volume of the 3D carcass model changes estimates of a centre of gravity or a geometric centre of the 3D carcass model, if computed. Spatial manipulation changing the total cubic measure of the 3D carcass model changes estimates of a weight of the 3D carcass model, if computed.

The suspension position may be determined via image processing, e.g. based on locating a geometrical object placed to indicate the suspension position, or it may be a fixed position in the domain of the 3D carcass model. The suspension position is a position at which the carcass is suspended e.g. on a hook as it is known in the art. Thus the representation of a suspension position may be a representation referring to (or having a known transformation or inverse transformation to) a position in the domain of the 3D carcass model and representing a physical suspension position relative to the carcass subject for imaging. Thus, the represented suspension position may be relative to the domain of the 3D carcass model or relative to the 3D carcass model itself.

Generally, the suspension position and the estimate of the centre of gravity may be computed in a 3D space or in a 2D space or in a 1D space. In case of a 1D space, the centre of gravity (which is a position) and the suspension position may correspond to respective positions in a direction longitudinal to the passage way or transverse to the passage way or along another predefined horizontal axis. In case of a 2D space the respective positions may correspond to a coordinate in a horizontal plane. In case of 3D space, one or both of the respective positions are 3D positions, however vertical components may be discarded.

The centre of gravity and the suspension position may be represented in a domain of the 3D carcass model such as in a 3D Cartesian coordinate system or a 2D Cartesian coordinate system.

In a first example, the spatial manipulation is applied to change the distribution of volume of the 3D carcass model and in turn an estimate of a centre of gravity of the 3D carcass model. In that case, the spatial manipulation is applied to horizontally align the estimate of the centre of gravity of the 3D carcass model with the suspension position.

In a second example, the spatial manipulation is applied to change the total cubic measure of the 3D carcass model. In that case, the spatial manipulation is applied to change an estimate of the weight of the carcass to make the estimate of the weight of the carcass match or equal the weight registered by a load cell. The total cubic measure of the 3D carcass model may be multiplied by a predefined weight-volume conversion factor (an estimate of mass density) to compute an estimated weight for comparison with the weight registered by a load cell. Alternatively, the total cubic volume may be assigned a unity mass density and the total cubic volume or the weight registered by a load cell may be transformed, such as scaled, to enable the weight or volume of the carcass match or equal the weight registered by a load cell or another scale having a known relation to weight. The weight-volume conversion factor may be a scalar value, but is not limited thereto as explained in more detail herein.

In a third example, the spatial manipulation is applied to change one or both of the total cubic measure of the 3D carcass model and the distribution of volume of the 3D carcass model in accordance with the above.

The spatial manipulation changes estimates of an estimated weight of the carcass and estimates of a centre of gravity. Applying the spatial manipulation in accordance with one or both of a weight registered by a load cell and a representation of a suspension position at which the carcass is suspended, makes it possible to apply to the 3D carcass model an accurate amount or degree of change in absence of accurate spatial information due to occlusion or sparse representation at the first region. Thus, the 3D carcass model is adapted to correspond to more reliable observations such as a weight value measured by a load cell or a horizontal location of a centre of gravity estimated by identifying the location of a suspension point, in case the carcass is suspended.

The manipulating of the 3D carcass model to change the volume of the 3D carcass model or the distribution of volume of the 3D carcass model in accordance with one or both of a weight registered by a load cell and a representation of a suspension position at which the carcass is suspended, may be performed by an iterative procedure comprising iteratively computing a cost measure that represents how well weight estimated from the 3D carcass model and/or a centre of gravity estimated from the 3D carcass model corresponds to the weight registered by the load cell and/or the representation of the suspension position. In some aspects a single iteration may be sufficient. The 3D carcass model may be based on one or both of a 3D point cloud and a polygon surface. The manipulation of the 3D carcass model comprises one or more of: adding 3D points or polygons, removing 3D points or polygons and moving 3D points or polygons.

The locating of the first region of the 3D carcass model by locating an occluded or spatially sparsely represented region of the 3D carcass model may be performed in different ways e.g. by computing a measure of spatial density of the point cloud or polygons at predefined locations or throughout the 3D carcass model. Therefrom a region with relatively low density, e.g. below a threshold, may be identified as the first region. In some aspects multiple regions are identified and one or multiple regions thereof are subject to manipulation concurrently with the first region. In some aspects, predefined locations in the 3D carcass model are directly selected as regions for the manipulation or they are prioritized in a search for regions that satisfies a criterion of having a certain relatively low spatial density (of the point cloud or polygons), such as below a threshold.

The multi-view images of the first set of multi-view images and the second set of multi-view images are all captured at the first point in time. The cameras of the first set of cameras and the second set of cameras are triggered at the same point in time. Thereby distortion of the 3D carcass model caused by physical movement of the carcass or changes in lighting (illumination) of the physical carcass is reduced. The cameras may have a first exposure time in the range of 0.05 to 5 milliseconds, such as 0.5 to 5 milliseconds and the cameras may receive a trigger signal within a short period of 0 to 10 microseconds to capture the multi-view images at first point in time. The multi-view images, which are acquired at the first point in time, are the multi-view images of the first set of multi-view images and the second set of multi-view images. By the multi-view images being acquired at the first point in time is understood that the cameras register the amount of light impinging on the sensor elements of their image sensors at the first point in time i.e. that the cameras 'capture' the images at the first point in time.

In some embodiments the first set of cameras and the second set of cameras comprise each 20 cameras. The first set of cameras and the second set of cameras may each comprise a larger number of cameras such as, but not limited to, 24 cameras, 25 cameras, 32 cameras or a smaller number of cameras such as 16 cameras. In some embodiments the cameras have an optical system with a focal length in the range of 5 to 9 millimetres, such as 6 to 8 millimetres. The first set of cameras and the second set of cameras are in the below also denoted a multi-view camera system. In some embodiments the cameras are colour cameras e.g. RGB cameras. Colour cameras register the images with colour information. This is useful e.g. for classifying regions as meat, fat , fat meat, lean meat or bone. The colour information and/or the classification of the region may be added to the 3D carcass model.

The 3D carcass model may be stored in a database or in other type of digital repository. The 3D carcass model may be analysed for the purpose of computing cut-lines and/or settings for a deboning machine to more accurately cut out valuable portions of meat. Also, the 3D carcass model may be analysed for the purpose of grading the carcass.

In some aspects the method comprises computing a grading of the carcass based on the 3D carcass model. The computing of the grading may comprise computing the volume of or a weighted volume of predefined regions in the 3D carcass model.

The passageway may be a passageway at which carcasses are guided to travel. The passageway may follow a conveyor that guide or conveys the carcasses. In some embodiments the conveyor is an overhead conveyor from which carcasses are suspended. In some embodiments the conveyor is a belt conveyor. Other transportation devices may be used to guide the carcasses to travel on or along the passageway. The carcasses may be carcasses of ovine, bovine, and porcine.

Thus, the 3D carcass model more accurately represents the physical carcass. Aspects thereof are described in more detail below.

The first set of cameras and the second set of cameras are also denoted a 3D camera system or a multi-view camera system. The first set of cameras and the second set of cameras in combination with a computer configured and coupled to process the multi-view images from the first set of cameras and the second set of cameras is also denoted a multi-view imaging system. A computer, or a system of computers, programmed to generate a 3D model from multi-view images is denoted a multi-view processor.

The first set of multi-view images is captured by cameras at respective multiple positions at the first side of a passageway, the second set of multi-view images is captured by cameras at respective multiple positions at the second side of the passageway.

In some embodiments the method comprises:

acquiring a weight measurement value from a load cell at which the carcass is weighed;
estimating a weight of the carcass from a volumetric computation of the 3D carcass model and a volume-weight conversion parameter;
verifying the 3D carcass model or performing the manipulation by manipulating one or both of 3D points and polygons within the first region with the objective of making the estimate of the weight of the carcass correspond to the weight measurement value.

Thereby the 3D carcass model is verified to be accurate or is adapted to correspond to the observation on the weight of the carcass.

Relative to the occluded or sparsely represented first region, the observation on the weight of the carcass provides a reliable measure for adapting the 3D carcass model to correspond to the observation and thus obtain an accurate 3D carcass model.

A load cell may be installed at an upstream location with respect to the multi-view camera system or at a downstream location; wherein upstream corresponds to a location from which the carcasses arrive to the multi-view camera system. The load cell may also be installed at the multi-view camera system to weigh the carcass at the first point in time, when the multi-view images are captured, or shortly before or after. The load cell may be installed with the conveyor as it is known in the art. Systems for registering information about a carcass and transmitting that information to a receiver which processes that information are known in the art of slaughterhouse operation automation. Thus weight information may be readily available.

From the 3D carcass model volumetric computations are performed to estimate the volume of the carcass from the 3D carcass model as it is and then a conversion parameter or set of parameters representing a volume-to-weight ratio is used to compute an estimate of the weight. The volume-to-weight ratio may be represented by a volume-weight conversion parameter. The volume-weight conversion parameter represents the mass density e.g. in units of $Kg/m^3$. However, it is clear to a person skilled in the art that a variety of forms of a volume-weight conversion parameter can be used to relate volume to weight or vice versa. A difference between the estimated weight and the weight measurement value is computed and therefrom a compensation volume is added to or subtracted from the 3D carcass model by manipulating one or both of 3D points and polygons within the first region with the objective of making the estimate of the weight of the carcass correspond to the weight measurement value. An iterative method may be applied for that purpose.

In some embodiments the method comprises:

estimating a first horizontal position of a suspension device from which the carcass is suspended with respect to the 3D carcass model;

estimating a second horizontal position of a centre of gravity of the 3D carcass model; and

verifying the 3D carcass model or performing the manipulation by manipulating one or both of 3D points and polygons within the first region with the objective of making the estimate of second horizontal position align with the first horizontal position.

Thereby the 3D carcass model is verified to be accurate or is adapted to have a centre of gravity located at a horizontal position aligned with a horizontal position of the suspension device. An object suspended to hang freely from a suspension point will settle at a position with its centre of gravity right below the suspension point. Since a carcass may weigh in the range above 50 kg to hundreds of kilos, the carcass will settle at a position with its centre of gravity right below the suspension point.

A centre of gravity of the 3D carcass model, i.e. the second horizontal position, may be estimated by computing a geometrical centre of the volume of the 3D carcass model. This may be performed under the assumption of a uniform volume-to-weight ratio. Alternatively, a centre of gravity of the 3D carcass model may be estimated by computing a geometrical centre of the volume of the 3D carcass model, wherein, in computing the geometrical centre, a volume element (voxel) is weighted by a volume-to-weight ratio determined e.g. from the relative or absolute position of the volume element.

The first horizontal position of a suspension device may be a predetermined position determined in one or more of the multi-view images such as at one or more predetermined columns of pixels. A predetermined position may provide a sufficiently accurate positon in case the suspension device carrying the carcass has the same position relative to the multi-view camera system each time an image is captured. The first horizontal position of a suspension device may additionally or alternatively be determined by processing one or more of the multiview images to locate the suspension device or a mark or sign attached to it.

Relative to the occluded or sparsely represented first region, the observation on the centre of gravity of the carcass (the horizontal location of the suspension point) provides a reliable measure for adapting the 3D carcass model to correspond to the observation and thus obtain an accurate 3D carcass model.

From the 3D carcass model volumetric computations are performed to estimate the volume of the carcass from the 3D carcass model as it is and then a conversion parameter or set of parameters representing a volume-to-weight ratio is used to compute an estimate of the centre of gravity. A difference between the estimated centre of gravity (second horizontal position) of the 3D carcass model and the first horizontal position of the suspension device is computed and therefrom a compensation volume is added to or subtracted or from the 3D carcass model and/or re-distributed in the 3D carcass model by manipulating one or both of 3D points and polygons within the first region with the objective of making the estimate of the centre of gravity correspond to the first horizontal position of the suspension device. An iterative method may be applied for that purpose.

In some embodiments the method comprises:

locating the occluded or sparsely represented region of the 3D carcass model as a first region within which a spatial density of points and/or polygons is relatively low compared to another region; and

selecting one or both of 3D points and polygons, within the first region, as subjects for manipulation of the 3D carcass model.

Thereby, regions providing only poor spatial representation of the carcass may be effectively identified. One or more regions may be identified in this way. One of those regions or prioritized one or more regions may be subject to the manipulation.

In some embodiments the manipulation of the 3D carcass model further comprises:

computing a geometrical indicator, with respect to the first region, representing a spatial direction indicative of an expansion or reduction of the volume of the 3D carcass model; and

performing the manipulation by manipulating one or both of 3D points and polygons within the first region in accordance with the spatial direction.

Such a geometrical indicator representing a spatial direction indicative of an expansion or reduction of the volume of the 3D carcass model, may be computed in different ways e.g. from an estimate of curvatures and a vector normal relative to face spanning the first region. Such a geometrical indicator may be used to advance the estimate of the weight of the carcass towards the weight measurement value or the estimate of centre of gravity towards the suspension point.

In some embodiments the method comprises:

before performing the manipulation of the 3D carcass model at the first region to scale the volume of the 3D carcass model or the distribution of volume of the 3D carcass model, replacing the first region or a substantive portion thereof by 3D points or polygons arranged on a plane or smoothly curved surface; and

connecting the 3D points or polygons arranged on a plane or smoothly curved surface to one or more regions surrounding the first region.

Thereby, image observations which may be prone to spatial errors may be replaced by a well-defined region, such as a more densely represented region. The replacing region may have a predetermined shape or curvature corresponding to a representation of common carcasses at that region. This may improve the speed at which the 3D carcass model is modified to be a more accurate 3D carcass model.

In some embodiments the method comprises estimating a second curvature of a second region adjoining the first region and manipulating the 3D points and/or polygons within the first region subject to a smoothness criterion enforcing a smooth transition from the second curvature to a first curvature of the first region.

In some embodiments the method comprises:

accessing a repository of one or more stored curvatures representing curvature of a surface at a cross-section; and

performing the manipulation of the 3D carcass model while constraining the curvature of the first region to adhere to a stored cross-sectional profile.

Thereby, the first region may be modified to more closely conform to curvatures of physical carcasses. This improves the accuracy of the 3D carcass model. Stored curvatures may comprise parameters of predefined curvature classes such as Splines or polynomials. The stored curvatures may be derived from measurements of physical carcasses.

In some embodiments the method comprises:

configuring a cutting machine on a production line in accordance with a cutting parameter computed from the 3D carcass model; and

identifying a carcass at the cutting machine and cutting the carcass in accordance with the cutting parameter.

In this way carcasses may more accurately cut out to improve yield of the carcass. This is especially desired to improve the yield of high quality meat sections. Also, the multi-view imaging system may control the cutting machines in a more efficient way to obtain faster cutting-up of the carcasses. The term 'cutting machine' comprises so-called 'deboning machines' known in the art.

In some embodiments the method comprises grading a carcass based on a quality measure computed from the 3D carcass model; and configuring a cut-up machine on a production line in accordance with a cut-up parameter computed from one or both of the grading and the 3D carcass model. The quality measure may relate to the volume of certain regions of the carcass.

The cut-up in accordance with the cutting parameters takes place while the cutting machines on the production line are configured in accordance with the cutting parameters.

In some embodiments the method comprises:

grading the carcass based on a quality measure computed from the 3D carcass model;

classifying at least one carcass among predefined classes and assigning a classification representation to a carcass record based on the quality measure; and

gathering a batch of carcasses assigned a predefined classification representation by routing carcasses assigned with the predefined classification representation to a selected facility area among multiple facilities.

Thereby batch processing of the carcasses can be provided when collectively retrieved from the facility sequentially or in batches. The 3D carcass model may be the 3D carcass model or the 3D carcass model as modified.

The quality measure may comprise a scalar parameter or a multi-dimensional parameter. The quality measure may be based on one or more of total volume or the carcass, volume at predefined locations or locations with a predefined colour representation.

The classification may be based on a statistical model such as, but not limited to, a nearest neighbour model or a support vector machine.

In some aspects the method comprises: configuring a cutting machine on a production line in accordance with a cutting parameter assigned with the classification representation; retrieving the gathered batch of carcasses from the selected facility and routing them to the production line; and cutting the carcasses in the batch of carcasses in accordance with the cutting parameter. Thereby the multi-view imaging system may control the cutting machines in a more efficient way to obtain faster cutting-up of the carcasses.

There is also provided a computer programme product comprising instructions making a computer system perform the method set out above when executed by the computer system.

There is also provided a system comprising: a multi-view imaging camera system comprising a first set of cameras arranged at a first side of a passageway for capturing a first set of multi-view images from respective multiple positions, and a second set of cameras arranged at a second side of the passageway for capturing a second set of multi-view images from respective multiple positions; and a computer programmed to:

acquire the first set of multi-view images and the second set of multi-view images at a first point in time upon detection of a carcass being present at a predetermined position at the passageway;
compute a 3D carcass model of the carcass or a portion thereof from the first set of multi-view images and the second set of multi-view images; wherein the 3D carcass model is based on one or both of a 3D point cloud and a polygon surface;
locate a first region of the 3D carcass model by locating an occluded or spatially sparsely represented region of the 3D carcass model; and
manipulate the 3D carcass model at least at the first region to change the volume of the 3D carcass model or the distribution of volume of the 3D carcass model in accordance with one or both of a weight registered by a load cell and a volume to weight conversion parameter nd a representation of a suspension position at which the carcass is suspended.

There is also provided a slaughterhouse production line, comprising a system as set out above.

There is also provided a method of imaging carcasses, comprising:

acquiring, using a first set of cameras, a first set of multi-view images from multiple positions at a first side of a passageway, and acquiring, using a second set of cameras, a second set of multi-view images from multiple positions at a second side of the passageway; wherein the multi-view images are acquired at a first point in time upon detection of a carcass being present at a predetermined position at the passageway;

computing a 3D carcass model, in a 3D domain, of the carcass or a portion thereof from the first set of multi-view images and the second set of multi-view images;

estimating a suspension position, at which the carcass is suspended; wherein the suspension position is represented in the 3D domain;

locating a first region of the 3D carcass model by locating an occluded or spatially sparsely represented region of the 3D carcass model; and

manipulating the 3D carcass model at least at the first region, comprising:

changing the volume of the 3D carcass model or the distribution of volume of the 3D carcass model to generate a manipulated 3D carcass model;

estimating one or both of a centre of gravity and a geometric centre of the manipulated 3D carcass model;

wherein the changing the volume of the manipulated 3D carcass model or the distribution of volume of the 3D carcass model is performed with an objective of moving the one or both of a centre of gravity and a geometric centre of the manipulated 3D carcass model towards or to a horizontal position vertically aligned with the suspension position.

In some embodiments the method comprises:

- registering a weight of the carcass by a load cell; and
- manipulating the 3D carcass model at least at the first region to change the volume of the 3D carcass model with the objective of making an estimated weight approach, match or equal the weight of the carcass as registered by the load cell; wherein the estimated weight is based on a volume of the 3D carcass model and a volume-weight conversion parameter.

In some embodiments the locating a first region of the 3D carcass model comprises identifying first regions of the 3D carcass model as regions of the 3D carcass model that have a 3D point density that fails to exceed a 3D point density threshold; and wherein the 3D point density threshold is adjusted until a predefined number of first regions are identified; the method comprising:

- determining the respective size of the one or more first regions, and in accordance therewith:

  - forgo manipulation of one or more first regions having a size smaller than a size threshold;
  - determining locations of one or more first regions at the 3D carcass model with respect to the suspension point e.g. by determining a horizontal position or distance;

    - replacing at least portions of one or more first regions having a size larger than the size threshold and having a location satisfying a first location criteria by a corresponding portion based on a predefined standard 3D carcass model;
    - identifying remaining one or more first regions, which has a size larger than the size threshold and/or having a location satisfying a second location criteria:

  - modifying the 3D carcass model at the remaining one or more first regions with the objective of making the centre of gravity of the 3D carcass model approach or coincide with the suspension position horizontally.

There is also provided a method of imaging carcasses, comprising:

- acquiring, using a first set of cameras (104), a first set of multi-view images from multiple positions at a first side of a passageway, and acquiring, using a second set of cameras (105), a second set of multi-view images from multiple positions at a second side of the passageway; wherein the multi-view images are acquired at a first point in time upon detection of a carcass being present at a predetermined position at the passageway;
- computing a 3D carcass model of the carcass or a portion thereof from the first set of multi-view images and the second set of multi-view images;
- locating a first region of the 3D carcass model by locating an occluded or spatially sparsely represented region of the 3D carcass model;

- registering a weight of the carcass by a load cell;
- manipulating the 3D carcass model at least at the first region to change the volume of the 3D carcass model with the objective of making an estimated weight approach, match or equal the weight of the carcass as registered by the load cell; wherein the estimated weight is based on a volume of the 3D carcass model and a volume-weight conversion parameter.

There is also provided a system comprising:

- a multi-view imaging camera system comprising a first set of cameras (104) arranged at a first side of a passageway for capturing a first set of multi-view images from respective multiple positions, and a second set of cameras (105) arranged at a second side of the passageway for capturing a second set of multi-view images from respective multiple positions;
- optionally: a load cell; and
- a computer programmed to perform a method set out above.

BRIEF DESCRIPTION OF THE FIGURES

A more detailed description follows below with reference to the drawing, in which:

fig. 1 shows a top-view of a transport section;

fig. 2 shows a first side-view of the transport section;

fig. 3 shows a cross-section of a carcass with camera view limits;

fig. 4 shows a cross-section of a 3D carcass model with sparsely sampled areas;

fig. 5 shows a cross-section of a carcass with an overlay of a cross-section of a 3D carcass model;

fig. 6 shows a first flowchart for a method of generating an accurate 3D carcass model;

fig. 7a is a first illustration of a portion of a 3D carcass model, and fig. 7b is a first illustration of a manipulation of a portion of the 3D carcass model;

fig. 8 is a second illustration of a portion of a 3D carcass model;

fig. 9 shows a second side-view of the portion of a production line and a carcass with indication of a visually observed centre of gravity and an estimated centre of gravity;

fig. 10 illustrates a slaughterhouse production line comprising a multi-view imaging system; and

fig. 11a shows a flowchart of controlling a cutting machine; and fig. 11b shows a flowchart of gathering and batch cutting a batch of carcasses.

DETAILED DESCRIPTION

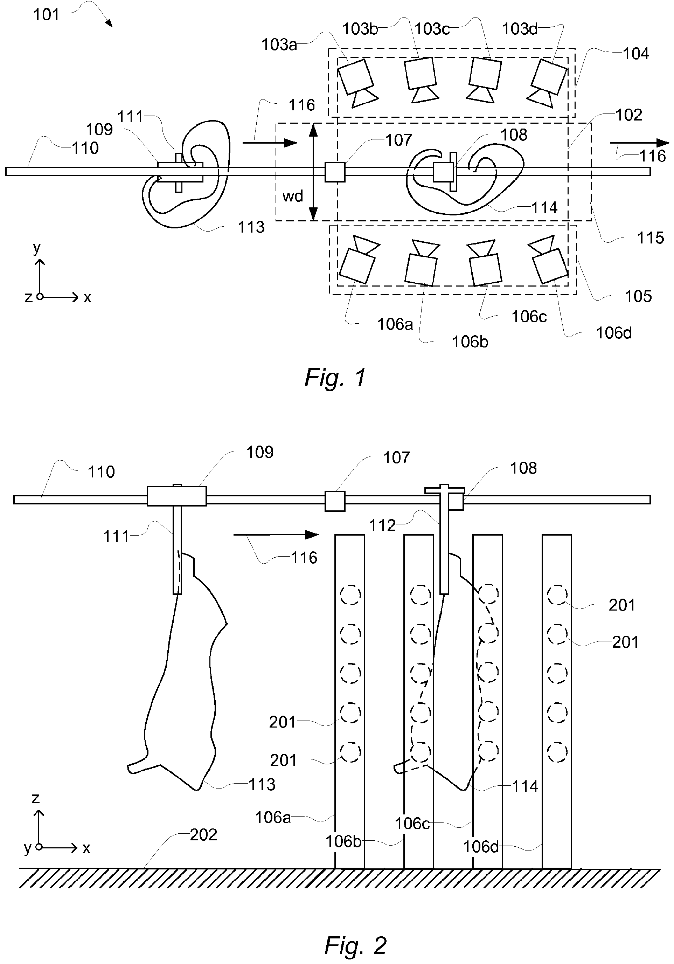

Fig. 1 shows a top-view of a transport section. The transport section 101 may be installed in a slaughterhouse in connection with a carcass processing line. The transport section 101 comprises a conveyor 110 and a 3D multi-view imaging station 102. The conveyor 110 may be an overhead conveyor with a conveyor track on which suspension devices, such as suspension device 111 and suspension device 112, travel. The direction along which the suspension devices move is indicated by the arrows 116. The suspension devices may be of a type with a hook member or a gripper member or a claw member holding carcasses, such as carcass 113 and carcass 114, for being conveyed along the conveyor. The suspension device 111 may comprise one or more of a swivel, a hook - such as a single hook or a double hook, and one or more shackles. The 3D multi-view imaging station 102 has a passageway 115 with a width, wd. A first set of cameras 104 are arranged on the left hand side of the passageway 115 and a second set of cameras 105 are arranged on the right hand side of the passageway 115. The first set of cameras 104 are arranged in first camera towers 103a, 103b, 103c, 103d and the second set of cameras 105 are arranged in second camera towers 106a, 106b, 106c, 106d. The camera towers 103a-d and 106a-d may be made from steel, such as stainless steel. The camera towers 103a-d accommodate the first set of cameras 104, which comprises multiple cameras. The multiple cameras, in the first set of cameras, are arranged at different vertical levels in the camera towers 103a-d and the camera towers 103a-d are spaced apart by a horizontal distance. Thereby a first set of multi-view images can be acquired from respective multiple positions at a first side of a passageway. Correspondingly, the camera towers 106a-d accommodate the first set of cameras 105, which comprises multiple cameras. The multiple cameras, in the second set of cameras, are arranged at different vertical levels in the camera towers 106a-d and the camera towers 106a-d are spaced apart by a horizontal distance. Thereby a second set of multi-view images can be acquired from respective multiple positions at a second side of a passageway.

In some embodiments the first camera towers 103a-d are spaced apart by 0.4 to 1.2 meters centre-to-centre e.g. substantially equidistantly. The second camera towers 106a-d may be arranged symmetrically with the first camera tower 103a-d. The distance between the first camera towers 103a-d and the second camera towers 106a-d measured at a right angle to the conveyor may be in the range of 2 to 4 metres e.g. about 3 metres. The passageway 115 may have a width, wd, of about 2.3 metres e.g. in the range of 1 to 3 metres. In some embodiments the first camera towers 103a-d and the second camera towers 106a-d are arranged along in a first row and in a second row, respectively. The first row and the second row may be straigth rows. The first row and the second row may be curved rows e.g. curved inwards towards the conveyor or passageway. The first row and the second row may be substantially parallel with the conveyor or passageway or symmetrical about the conveyor or a longitudinal centre line of the passageway. The closest distance between a camera tower on the first side of the passageway and a camera tower on the second side of the passageway may be greater than the distance between two neighbouring camera towers on one side of the passageway.

The first camera towers 103a-d and the second camera towers 106a-d may have a smooth or flushing surface with a transparent screen protecting the multiple cameras, and their lenses, of the first set of cameras 104 and of the second set of cameras 105 from direct contact with the surroundings. This is expedient e.g. to facilitate easier and faster cleaning.

A control system (not shown) is described in more detail below.

At the conveyor 110 is arranged a load cell 109. The load cell 109 is arranged, as shown, some distance upstream of the 3D multi-view imaging station 102. However, the load cell 109 may be arranged at another position at the conveyor upstream or downstream of the 3D multi-view imaging station 102 or e.g. at the conveyor within a rectangle circumscribing the first camera towers 103a-d and the second camera towers 106a-d. The load cell 109 communicates, e.g. by transmitting to or making available for reading by the control system, a weight measurement value representing the weight of a carcass, e.g. carcass 113, suspended from the suspension device 111 at the conveyor. Thus, the control system can acquire a weight measurement value from the load cell 109 at which a carcass is weighed.

At the conveyor 110 is arranged a first sensor 107. The first sensor registers that a suspension device and/or carcass is detected at the first sensor 107. The first sensor 107 is arranged, as shown, at an entryway to the 3D multi-view imaging station 102 or at some distance upstream of the centre of a rectangle circumscribing the first camera towers 103a-d and the second camera towers 106a-d . The first sensor 107 communicates a first signal indicating that a suspension device or carcass suspended therefrom is detected at the location of the first sensor to the control system. The first signal may be used to arm cameras in readiness of being triggered to acquire multi-view images.

At the conveyor 110 is arranged a second sensor 108. The second sensor 108 registers that a suspension device and/or carcass is detected at the second sensor 108. The second sensor 108 is arranged at or about a position above a focal centre of the cameras or a geometrical mean thereof. The second sensor 108 may be arranged at the centre of a rectangle circumscribing the first camera towers 103a-d and the second camera towers 106a-d. The second sensor 108 communicates a second signal indicating that a suspension device or carcass suspended therefrom is detected at the location of the second sensor to the control system. The second signal may be used to trigger simultaneous acquisition of multi-view images. Thus, the multi-view images can be acquired at a first point in time, upon detection of a carcass being present at a predetermined position at the passageway;

Fig. 2 shows a first side-view of the transport section. In this side-view it can be seen that the second camera towers 106a-d are arranged on the floor 202. The first camera towers 103a-d are also arranged on the floor 202. The camera towers may be fixated to the floor 202 e.g. by being bolted to the floor. It can be seen that the conveyor 110 extends above the camera towers however the camera towers may extend above the conveyor. In some embodiments the camera towers are fixated to each other e.g. by transverse beams or bars.

The multiple cameras in the second set of cameras 105 are represented by dashed circles - designated by reference numeral 201. The multiple cameras of in the first set of cameras 104 are not shown in this side-view.

The conveyor may convey the carcasses (its suspension devices) at a substantially constant speed of about 0.05 to 1 metres per second or at intervals separated by stand-still periods.

The height (vertical extend) of the carcass may be in the range of 2 to 3.6 metres for calf carcass. Carcass may be any carcass from e.g. ovine, bobine, or porcine.

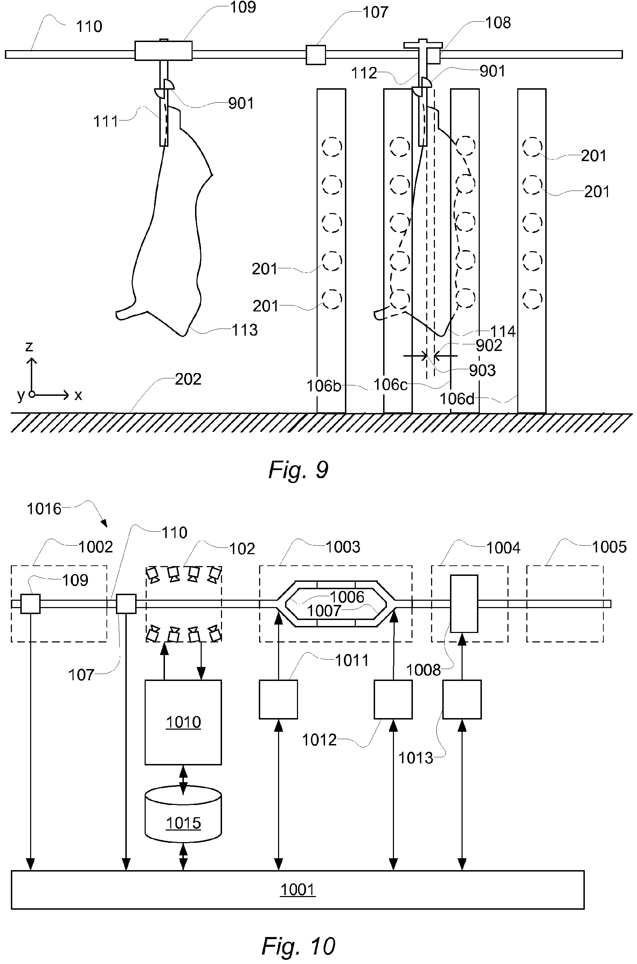

As described herein, in some embodiments a suspension position is given by a representation of a suspension position at which the carcass is suspended. The suspension position may coincide with a physical, geometrical feature of the suspension device 111 or a fiducial mark (cf. fig. 9, reference numeral 901) attached to the suspension device, such as a mark known to be recognizable by image processing. The suspension position may be determined by locating a geometrical feature of the suspension device 111 in one or more of the acquired images e.g. in the domain of the 3D carcass model. The suspension position may be determined to coincide with an elongated portion, such as rod portion, of suspension device 111 which may assume a vertical orientation when a carcass is suspended from the suspension device 111. A person skilled in the art may experiment to determine a suitable geometrical landmark representing the suspension point. The suspension point in turn represents the horizontal centre of gravity of the physical carcass since the carcass typically is effectively swivelling suspended considering the swivelling type of hooks from which the carcass is suspended, flexibility of the carcass, and the weight of the carcass.

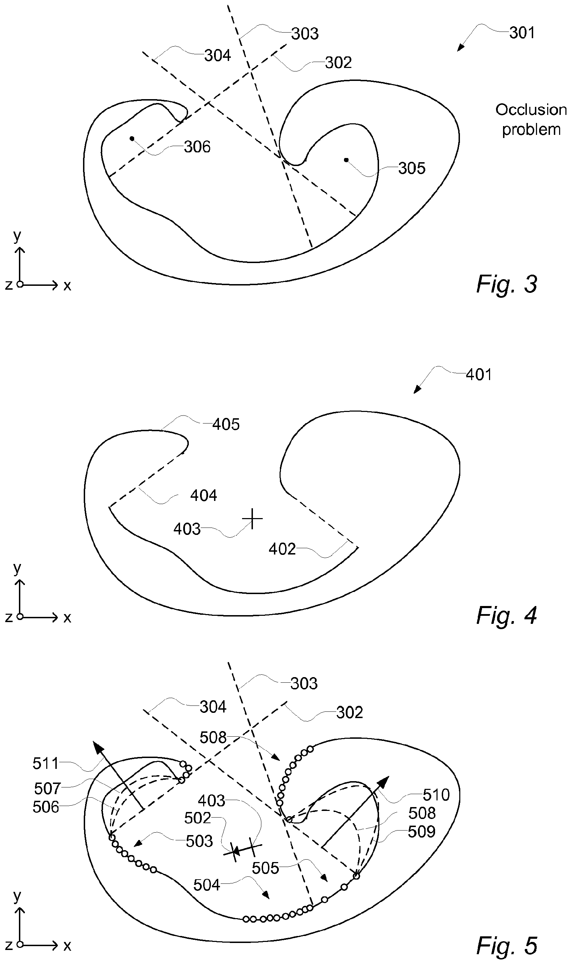

Fig. 3 shows a cross-section of a carcass with camera view limits. The carcass cross-section 301 is a horizontal cross-section of a carcass suspended as shown in fig. 2. The cross-section 301 reveals a first cavity 305 and a second cavity 306. It should be noted that the cross-section 301 and the cavities may have different shapes than the one shown as an illustrative example. In one example, the first cavity 305 corresponds to the thoracic cavity of ovine, bovine or porcine.

The dashed lines illustrate field-of-view limits for cameras installed in a 3D multi-view imaging station. Each camera has a field-of-view. Outside the field-of-view the camera makes no registration of image information. Thus, if none of the cameras has a field-of-view registering image information from a region, that region is said to be occluded. For instance a field-of-view limit 302 illustrates that no camera registers image information from the second cavity 306. Correspondingly, a field-of-view limit 304 illustrates that no camera registers image information from the first cavity 305 and the first cavity is then occluded. Generally, the 3D multi-view imaging station 102 is configured to register image information from a point on the surface of the carcass by more than one camera. Such a system may be configured with field-of-views of its cameras arranged to acquire images with an overlap of 40-80% e.g. about 60% between two images that have the highest level of correlation. The overlap is necessary to ensure that 3D information can be derived from the images. Thus some regions on the surface of an object may be densely represented since relatively many images overlap, whereas other regions are sparsely represented since only one or relatively few images over at that region. The field-of-view limit 303 illustrates a transition from a densely represented region to a sparsely represented region on the surface of the carcass. The surface within a cavity may be sparsely represented or not represented at all by image information.

Fig. 4 shows a cross-section of a 3D carcass model with sparsely sampled regions. The 3D model cross-section 401 illustrates a cross section of 3D model rendered from image data provided by the 3D multi-view imaging station 102. Since, as shown in fig. 3, no image information is available from the surface within the first cavity 305 and second cavity 306, the 3D carcass model provides only poor or lacking spatial information at those regions. The case may also be that the density of image information from the inside of the cavities is not lacking, but is relatively poor, which also leads to the 3D carcass model providing only poor or lacking spatial information at those regions. Generally, an outer side of the 3D carcass model 405 is densely represented at least at regions being more parallel to than orthogonal relative to the travel direction of the conveyor.

One strategy is to render the 3D carcass model with a coarser resolution at such sparsely represented regions e.g. as shown by a sparsely represented region 404 and a sparsely represented region 402. Another strategy is to ignore or filter out image information at such sparsely represented regions to render the 3D carcass model with a flat or smooth region where the information is dense or sparse e.g. as shown by the sparsely represented region 404 and the sparsely represented region 402.

A first centre of gravity can be estimated from the 3D carcass model. The horizontal position of the first centre of gravity 403 is illustrated by a first cross.

Fig. 5 shows a cross-section of a carcass with an overlay of a cross-section of a 3D carcass model. The horizontal position of the first centre of gravity 403 is illustrated by the first cross whereas a second centre of gravity 502 is shown by a second cross offset from the first cross.

The first centre of gravity 403 is computed from the 3D carcass model e.g. as it appears in fig. 4. The second centre of gravity 502 is computed when the 3D carcass model has been manipulated at least at the region 402 or the region 404 to change the volume of the 3D model or the distribution of volume of the 3D model in accordance with one or both of a weight registered by a load cell and a representation of a suspension position at which the carcass is suspended.

The manipulation is illustrated by an estimated region 506 and an estimated region 507 and by an estimated region 508 and an estimated region 509. The shape of the first cavity 305 is then estimated by the estimated region 508 or the estimated region 509. Correspondingly, the shape of the second cavity 306 is then estimated by the estimated region 506 or the estimated region 507. The deepness or other shape parameters of the estimated regions may be estimated iteratively by aiming for one or both of a target location of the centre of gravity and an estimated target weight of the 3D carcass model. The target location of the centre of gravity may be the horizontal position of a suspension point. The target weight of the 3D carcass model may be obtained from the load cell. An estimated volume of the 3D carcass model may be converted to an estimated weight e.g. by assuming the each volume unit has a unitary volume weight.

A direction 510 indicates in increasing concavity that erodes the volume of the 3D carcass model. Thus, the estimated region 508 may be replaced, e.g. during an iterative process, by the estimated region 509 whereby the estimated weight of the 3D carcass model is lowered and whereby the centre of gravity of the 3D carcass model moves towards the second point of gravity 502. Correspondingly, a direction 510 indicates in increasing concavity that erodes the volume of the 3D carcass model.

Densely represented region 503, 504 are illustrated by closely located small circles, whereas a less densely represented region 505 is represented by more sparsely located small circles.

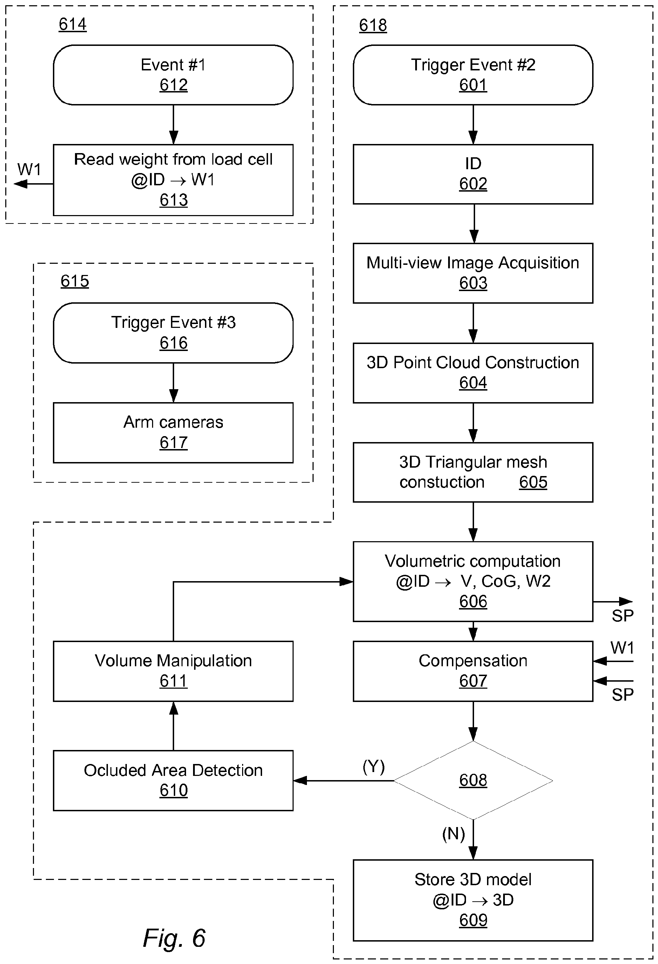

Fig. 6 shows a first flowchart for a method of generating an accurate 3D carcass model.

A first section 614 of the flowchart illustrates that a first event 'Event #1' is detected at step 612. The first event may be that a suspension device e.g. suspension device 111, travelling on the conveyor 110, enters the load cell 109. Upon detection of the first event, a weight measurement value is acquired at step 613 from the load cell at which the carcass, if any, suspended by the suspension device is weighed. In connection therewith the weight measurement value may be recorded in an electronic record with an identification code identifying the carcass being weighted. The weight measurement value is then made accessible via the identification code. This is known in the art.

A third section 615 of the flowchart illustrates that a third event 'Event #3' is detected at step 616. The third event may be that a suspension device, travelling on the conveyor 110, reaches or passes the first sensor 107. Upon detection of the third event, the cameras at the 3D multi-view imaging station 102 are 'armed' at step 617. 'Arming' the cameras comprises preparing the cameras for registering ('taking') an image - at the same point in time - shortly after the third event being detected. 'Arming' the cameras comprises what is sometimes denoted 'initializing' the cameras such as one or both of: transmitting settings to each of the cameras and 'waking up' the cameras from a low power state. This reduces the risk that one or more of the cameras are not ready to register an image at the same point in time. The settings transmitted in connection with 'arming' the cameras may comprise one or more of 'exposure time', 'white balance' and 'gain'.

A second section 618 of the flowchart illustrates that a second event 'Event #2' is detected at step 601. The second event may be that a suspension device, travelling on the conveyor 110, reaches or passes the second sensor 108. Upon detection of the second event, steps of image acquisition, 3D carcass model construction and manipulation of the 3D carcass model are performed. The steps may be performed in another order than shown and some steps may be performed concurrently.

In one embodiment, as shown, an identification code, ID, is read from an electronic record associated with the carcass present at the 3D multi-view imaging station 102 upon detection of the second event. An electronic data processing system may provide the electronic record associated with the carcass present at the 3D multi-view imaging station 102. At step 603 multi-view image acquisition is performed. Step 603 involves acquiring a first set of multi-view images, using the first set of cameras 104, from respective multiple positions at a first side of the passageway, and acquiring a second set of multi-view images, using a second set of cameras 105, from respective multiple positions at a second side of the passageway 115. The multi-view images are acquired simultaneous at a first point in time. Step 603 may be performed directly upon detection of the second event. Since the carcass is moving on the conveyor, such as at substantially constant velocity, the multi-view images are acquired at the exact same point in time to reduce motion artefacts and distortion of the 3D carcass model to be generated from the multi-view images.

Then, when the multi-view images have been acquired, the 3D carcass model is generated at steps 604 and 605. These steps are computationally heavy and may comprise a step 604 of generating a 3D point cloud and therefrom generating 3D triangular mesh in step 605. Software is publicly available either as proprietary software or as open source software for generating a 3D model. Step 604 and step 605 represents such generation of a 3D model - such as a 3D carcass model.

When a 3D carcass model is generated as a result of performing one or both of step 604 and step 605 it may be stored on an electronic storage medium. Then, in step 606 a volumetric computation is performed. The volumetric computation comprises one or both of:

    1) Estimating a weight, W2, of the carcass from the 3D carcass model and a volume-weight conversion parameter; and
    2) Estimating, with respect to the 3D carcass model, a first horizontal position, SP, of a suspension point at which the carcass is suspended, and estimating a second horizontal position, CoG, of a centre of gravity of the 3D carcass model.

The first horizontal position, SP, may be estimated from time-to-time a carcass arrives at the 3D multiview imaging station 102 and/or it may be estimated or encoded at calibration events.

Then, at step 607, one or both of the following are performed:

    1) The estimated weight, W2, is compared to the weight measurement value, W1, acquired from the load cell; and
    2) The first horizontal position, SP, is compared to the estimated second horizontal position, CoG.

Further, at step 607, it is determined, based on the comparisons in 1) and/or 2) above, whether to perform (Y) volumetric manipulation of the 3D carcass model or whether to forgo (N) performing volumetric manipulation of the 3D carcass model. The determining of whether to perform (Y) volumetric manipulation or to forgo (N) performing volumetric manipulation may be based on the amount of deviation between the compared estimates e.g. based on whether a threshold deviation is exceeded or not.

Based on the above determination the flowchart branches out at step 608 to store the 3D carcass model at step 609 in case (N) or to step 610 in case (Y).

At step 610 the 3D carcass model is processed to identify one or both of occluded regions or sparsely represented regions. Then, at step 611, the volume of the 3D carcass model is manipulated as described above and in the following to change the volume of the 3D carcass model or the distribution of volume of the 3D model in accordance with one or both of a weight (W2) registered by a load cell and a representation of a suspension position (SP) at which the carcass is suspended. In some embodiments such volume manipulation of the 3D carcass model is performed in one iteration wherein step 611 leads to step 609 whereat the 3D carcass model is stored. In other embodiments, as shown, such volume manipulation of the 3D carcass model requires multiple iterations wherein step 611 leads to resuming step 606 such that an iterative loop is formed. The iterative loop is eventually concluded by storing the 3D carcass model, as volumetrically manipulated, in step 609.

It should be noted that the generation of a 3D carcass model as performed in steps 604 and 605 and the multi-view image acquisition may involve filtering, cleaning and cropping of image information and 3D model information. Such techniques are however known in the art. Multi-view image acquisition may also involve correction or compensation acquired images.

The 3D carcass model may be stored at step 605, step 605 and/or step 609 in a digital format e.g. a so-called '.ply-format'. However, various other formats may be used as known in the art.

The centre of gravity, CoG, - in vector notation $\overline{x_{CoG}}$ - for a 3D model, such as the 3D carcass model, may be computed as it is known in the art. One method, among other methods, of computing the centre of gravity builds on the assumption that the volume of the 3D model has the same weight-volume ratio across its volume. Each polygon, e.g. triangle, defining the surface of 3D model is assigned a density, $\rho_n$, which is proportional to the Area, $A_n$, of the polygon, n.

$$\rho_n = \frac{1}{A_n}$$

The location of the polygon, n, is represented by the vector $\overline{x_n}$. The vector $\overline{x_n}$ may point to the centre of the polygon e.g. as defined by the centroid of the the polygon, such as the centroid of the triangle. The location of the centre of gravity is then computed by:

$$\overline{x_{CoG}} = \frac{\sum_n A_n \overline{x_n}}{\sum_n A_n}$$

Wherein $\overline{x_{CoG}}$ is a 3D vector. In some embodiments the suspension point, SP, is represented as a 1D or 2D horizontal position (or vector). Thus, when comparing $\overline{x_{CoG}}$ and SP the corresponding elements of $\overline{x_{CoG}}$ is/are used. Correspondingly, a difference between $\overline{x_{CoG}}$ and CP may be represented as a scalar (an offset, e.g. in the x-direction or y-direction) or a 2D vector (in the horizontal plane, x-y plane).

The person skilled in the art may consult www.geometrictools.com, handbooks and other resources for more details on this and other methods related to 3D models.

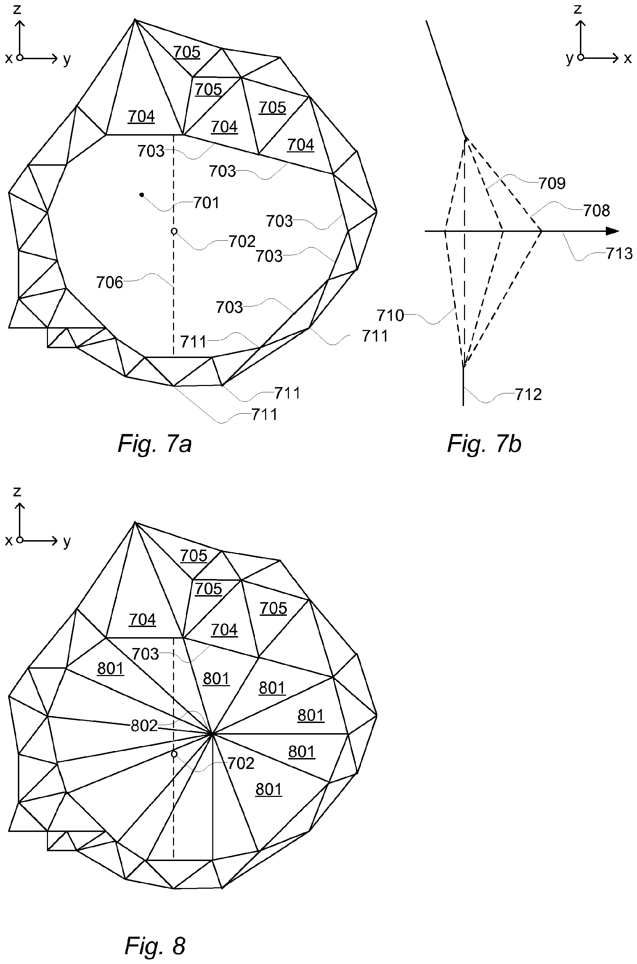

Fig. 7a is a first illustration of a portion of a 3D carcass model, and fig. 7b is a first illustration of a manipulation of a portion of the 3D carcass model. Fig. 7a illustrates a portion of the 3D carcass model surrounding an occluded region 701. The occluded region 701 is identified by measuring the spatial distribution of points 711 or geometrical polygons 704, such as triangles, in the 3D carcass model. The occluded region 701 is additionally or alternatively identified by counting polygon sides 703 defining a region and in case more than a threshold number of sides defines the region, it is determined to be an occluded region 701. At other, more densely represented regions of the 3D carcass model, the 3D carcass model comprises triangles 705 defining the surface of the 3D carcass model spatially. The triangles 705 may be associated with properties such as colour and/or texture in the 3D carcass model.

In fig. 7b, the direction 713 indicates a direction eroding the volume of the 3D carcass model and has an orientation normal to the occluded region 701. An edge of the occluded region 701, defined by polygon sides 703, is not necessarily located in a plane, hence the orientation normal to the occluded region 701 refers to an orientation which is normal to a plane approximating the occluded region 701.

By manipulation, as described above, the occluded region (which is a multi-sided polygon) may be replaced by multiple triangles or other polygons, such as squares, with fewer sides than the occluded region. This may involve selecting a position 702 (coinciding with direction 713) within the occluded region 701 and adding triangle defined by sides of the occluded region along its edge and the position 702. This is illustrated in fig. 8, wherein the triangles are designated by reference numeral 801 (note however, that the triangles are defined by a point 802 offset from point 702).

Reverting to fig. 7b, the dashed curves 710, 709 and 708 illustrate different profiles along the dashed line 706 extending across the occluded region 701. The dashed curves 710, 709 and 708 represent different locations (depths) of the point 702. Dashed curve 710 represents that the volume of the 3D carcass model is increased whereas dashed curves 708 and 709 represent that the volume of the 3D carcass model is decreased (eroded).

As illustrated, the occluded region 701 is modified to comprise at least one additional point 702 or 802. However, multiple points may be added to the 3D carcass model e.g. to approximate a desired shape. The desired shape may be defined by a class of polynomials or Splines representing curvatures observed in carcasses. In some embodiments the manipulation of the 3D carcass model includes adhering computationally to such a class of polynomials or Splines.

As explained, the case may also be that the density of image information from the inside of the cavities is not lacking, but is relatively poor, which also leads to the 3D carcass model providing only poor or lacking spatial information at those regions. One strategy is to relocate the points in such areas instead of removing them. Another strategy is to both relocate the points in such areas and to add additional points.

Fig. 9 shows a second side-view of the portion of a production line and a carcass with indication of a visually observed centre of gravity and an estimated centre of gravity. In this second side-view it is shown that the suspension device 111 and the suspension device 112 are configured with a visual mark 901. The visual mark may comprise two opposing quarter circles arranged point-to-point as shown and coloured to stand out with high contrast in an image. A centre point of the mark is located horizontally to indicate the point at which a carcass is suspended from the suspension device. This point may indicate the centre of gravity of the carcass in the physical world - since the carcass typically is effectively swivelling suspended considering the swivelling type of hooks from which the carcass is typically suspended, flexibility of the carcass, and the weight of the carcass. The visual mark may be configured with graphical features that enable accurate determination - via image processing - of a horizontal suspension position at least in the travel direction along the conveyor.

The carcass 114 is located at a position at the 3D multi-view imaging station 102. At this position the horizontal position of an estimated centre of gravity - before the 3D carcass model is manipulated - is illustrated by a first vertical dashed line 902. The first vertical line crosses the first centre of gravity 403 illustrated above in a cross-section of the 3D carcass model. At the same position the horizontal position of the physical centre of gravity is illustrated by a second dashed line 903. The physical centre of gravity is assumed to be located straight below the suspension point indicated by the mark 901.

By the manipulation of the 3D carcass model the distribution of volume of the 3D carcass model may be changed in accordance with one or both of a weight registered by a load cell and a representation of a suspension position at which the carcass is suspended - here represented by the mark 901. Thereby the estimated centre of gravity of the 3D carcass model, as illustrated by the first dashed line 902, is brought to coincide with the physical centre of gravity as illustrated by the second dashed line 903.

The mark 901 may be attached to the suspension device 112 or it may be attached to the conveyor. In the latter case the position of the mark is aligned with the second sensor 108. In some embodiments the mark 901 is dispensed with since the suspension device itself has graphical or structural features that enable accurate determination - via image processing - of a horizontal suspension position at least in the travel direction along the conveyor.

As mentioned above, the horizontal position of a suspension device may be a predetermined position determined in one or more of the multi-view images such as at one or more predetermined columns of pixels. A predetermined position may provide a sufficiently accurate positon.

Fig. 10 illustrates a slaughterhouse production line comprising a multi-view imaging system. The multi-view imaging system comprises the multi-view camera system 102 and a multi-view processor 1010. The multi-view processor 1010 is programmed to perform the method set out in the second section 618 of the flowchart shown in fig. 6. The multi-view processor 1010 may communicate with a control system 1001 via a database 1015. The database 1015 may store the 3D carcass models associated with respective identification codes. The database 1015 may also be used to communicate the weight measurement value from the load cell 109, to obtain an identification code for a carcass present at the 3D multi-view imaging station 102 etc.

The slaughterhouse production line 1016 comprises one or more stations. A first station 1002 is located upstream of the 3D multi-view imaging station 102. The first station 1002 may comprise facilities for receiving livestock and for slaughtering the livestock, whereby carcasses are supplied via the conveyor 110 to the 3D multi-view imaging station 102. Downstream of the 3D multi-view imaging station 102 the conveyor 110 may extend to bring carcasses to a second station 1003. The second station comprises multiple parallel conveyors (sometimes denoted rails) onto which carcasses can be controllably routed via a switch 1006 and from which multiple parallel conveyors carcasses can be retrieved via a switch 1007. The switch 1006 and the switch 1007 are controlled by the control system 1001 via respective controllers 1011 and 1012. The control system 1001 routes the carcasses based on their identification code and a classification of the carcasses based on the 3D carcass model. The station 1003 may comprise a cold store.

Further, downstream of the second station 1003, a third station 1004 may comprise a cutting machine 1008 which is controlled via a controller 1013. The cutting machine 1008 is controlled via cutting parameters computed from the 3D carcass model. The cutting machine may be a deboning machine. The cutting parameter may be a cutting profile parameter. The third station 1004 is sometimes denoted a dressing line.

After cutting and/or deboning, the carcasses arrive at a cold store 1005. As an illustrative example, the travel time for a carcass from being slaughtered at the first station 1002 to arriving at the second station 1003, when configured as a cold store, is less than about one hour.

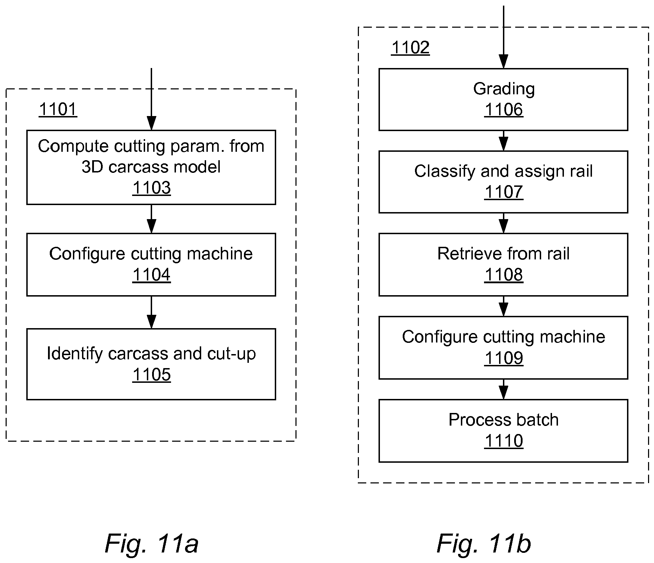

Fig. 11a shows a flowchart of controlling a cutting machine; and fig. 11b shows a flowchart of batch processing carcasses.

The flowchart 1101 illustrates control of a cutting machine, such as a deboning machine. At a first step 1103 cutting parameters are computed from the 3D carcass model, which may be spatially modified as described above. Since the cutting parameters, at least in some situations, are computed from the 3D carcass model which is spatially modified, the yield from the carcass is improved.

At a second step 1104 the cutting machine, such as the deboning machine, is configured with to perform the cutting or deboning in accordance with the cutting parameter. At a third step 1105 a carcass present at the cutting machine is identified and cut in accordance with the cutting parameter.

The flowchart 1102 illustrates batch processing carcasses. At a first step 1106 a carcass is graded by performing grading. Grading may comprise associating a carcass identified by an identification code with one or more of: age, sex, breed, weight, conformity, and compliance with ecologic breeding. 'Conformity' comprises one or more parameters representing one or both of shape of predefined portions of the carcass and volume of predefined portions of the carcass. In some aspects the predefined portions comprise the whole carcass.

Then, at step 1107 a carcass is classified into a class e.g. into one class among e.g. 20 to 50 classes of carcass. The classification may be stored in an electronic record with the identification code of the carcass. Further, based on the classification, a carcass may be assigned a rail at the second station 1003. When the carcass, which is classified, arrives at the second station 1003 the switch 1006 is controlled accordingly to bring the carcass onto the assigned rail. In some embodiments there is one or more rails per class.

Steps 1106 of grading the carcasses and step 1107 of performing classification and routing the carcass onto the selected rail may be performed on an ongoing basis as carcasses travels from the 3D multi-view imaging station 102 and onto the rails. Concurrently therewith - or at intervals or at later points in time - a step 1108 of retrieving carcasses from a selected rail is performed. The carcasses may be retrieved as a batch one after the other from the selected rail. Hence, a cutting machine or deboning machine may be configured at step 1109 to cut in accordance with cutting parameters which is the same for the entire batch of carcasses. Then at subsequent step 1110 the entire batch may be cut or deboned in accordance with the cutting parameters.

In some embodiments the cutting machine 1008 is a system of machines such as a robot comprising a cutting machine or deboning machine.

Herein, the term 'spatial density' or '3D point cloud density' is used to represent a local resolution (3D points per area unit) of the 3D carcass model. The 3D point cloud density may vary across the 3D model as described herein. A threshold density may be an adaptive threshold density, which may be determined locally across the surface of the 3D model.

The below is based on strategies adapted to availability of one or both of a weight of the carcass as obtained via a load cell and a representation of a suspension position in the domain of the 3D model.

In some embodiments the method comprises loading a predefined standard model of the type of carcass being subject to imaging. The predefined standard model may be a geometrical model defined by 3D points, curvature shapes in 2D or 3D or by metadata defining properties for the geometrical representation of a carcass.

In general the predefined standard model defines one or more constraints in addition to one or both of the weight obtained from a weighing cell and the suspension position. One or both of the weight and the suspension position may be a main constraint that must be satisfied, whereas subordinate constraints defined by or derived from the predefined standard model may be relaxed. Thereby, two disjoint regions may be manipulated based on one or both of the weight obtained from a weighing cell and the suspension position as a main criterion and a curvature criterion derived from the predefined standard model; the curvature criterion controlling distribution of the amount of volume manipulation to be applied. The curvature criterion may be defined explicitly by metadata comprising one or more parameters or ranges of parameters.

Subordinate constraints may also be defined by a predefined standard model comprising a representation of 3D points or 3D surfaces. The constraints may be defined by distances between 3D points in the generated 3D model subject for volume manipulation and corresponding 3D points in the predefined standard model. The volume manipulation may be subject to optimization of a cost function representing a sum of distances between corresponding points.

A predefined standard 3D model may be used to partially or fully support modifying regions of the 3D model. In connection therewith correspondence between positions or regions of the predefined standard 3D model and the 3D carcass model which is obtained by imaging and manipulation, is obtained by enabling navigation in the respective 3D models. Thereby a predetermined region can be located in both models. Alternatively or additionally an identified first region in say the predefined standard model can be used to locate a corresponding first region in the 3D carcass model. In some embodiments navigation is based on identifying one or both of key properties, such as orientations and magnitudes of inertial axes (moment of inertia per axis), and key points on the 3D the surface of the 3D carcass model. Once these key properties and/or key points are determined, similar locations on the models may be well defined and used to navigate the respective models. A person skilled in the art will be familiar with such navigation. This may also define the scale and rotation of the 3D model with respect to the predefined standard 3D model.

In some embodiments there is no need for further manipulation of regions that have been replaced by that of a standard reference carcass. In some embodiments these regions are subsequently subject to scaling (along the geometric indicator direction) to satisfy the constraints on the mass and/or the location of the suspension point.

### 1) Embodiments based on determining a weight of the carcass by a load cell

In embodiments wherein a weight of the carcass is determined from a weighing cell (e.g. giving a reading of 147.6 Kg or 150.0 Kg) there is generally one degree of freedom for manipulating the 3D model by the method given an objective of making an estimate (based on the manipulated 3D model) of the weight of the carcass correspond to or match the weight measurement value. Thus, in case no other constraints are applied there is generally one degree of freedom for manipulating the 3D model. Thus, a robust method for improving the accuracy of the 3D model involves manipulating the 3D model in one coherent region where the 3D point cloud density is relatively low (i.e. relatively sparsely represented), such as below a threshold density. Such a method has shown to lead to generally more accurate 3D models in the sense that a 3D model is improved at an identified, local region in the 3D model. The method may forgo manipulating the volume of the 3D model at other regions.

The 3D model may be manipulated by adding or subtracting a 3D volume at the identified region, to make the estimated weight based on the 3D model correspond to a weight measured by a weighing cell, by striking a trade-off between the size (area) of the region and the required magnitude (depth) of manipulation.

In some embodiments, the method comprises:

- identifying one or more regions for manipulation by selecting one or more regions located at respective locations among multiple identified regions;
- computing the, e.g. in a 2D plane, of the one or more regions; and
- selecting one or more regions with the largest expanse for manipulation.

Thereby, a least amount of curvature manipulation is required, which may increase the likelihood of generating a robust 3D carcass model.

In case that two or more regions are identified since the 3D point cloud density is below a threshold density at two or more disjoint regions, the two or more regions may be merged into one region subject to a merge criterion. The merge criterion may comprise a maximum distance between regions for enabling merging of the regions and/or one or more other criteria. In case the maximum distance between the regions is exceeded the largest area among the identified regions may be selected for manipulation whereas the method forgoes manipulation of the one or more other identified regions.

In some embodiments, in accordance with two or more respective regions being identified, the magnitude of volume manipulation at the respective regions may be weighted in accordance with the expanse, e.g. in a 2D plane, of the respective regions.

In some embodiments the threshold density may be set, e.g. iteratively, to identify a predefined number of regions that are mutually disjoint.

### 2) Embodiments based on determining a suspension position in one or both of a lateral direction and transverse direction:

In embodiments wherein suspension position is determined in one of a lateral direction or a transverse direction, there is generally one degree of freedom for manipulating the 3D model by the method given the objective of making an estimate (based on the manipulated 3D model) of the centre of gravity of the carcass correspond to the lateral suspension position. Correspondingly, in case the suspension position is determined in both a lateral direction and a transverse direction, there is generally two degrees of freedom for manipulating the 3D model. In some embodiments, the volume-weight conversion parameter is not required as an input for manipulations. This applies in cases where the carcass density is assumed to be uniform.

In embodiments where the carcass density is not assumed to be uniform, an absolute or relative multi-dimensional volume-weight conversion parameter may be used in accordance with the location of the region selected for manipulation.

The constraining strength of the horizontal position of the suspension point depends on the locations of the regions selected for manipulation. In some embodiments, measures are taken to reduce the risk of manipulating the 3D model by adding or subtracting volume centred about a vertical axis through the suspension point, since then there is a risk of ruining the 3D model rather than improving it. The measures to reduce the risk of manipulating the 3D model unsuccessfully or in vain, may comprise verifying that the volume manipulation given by its cubic volume and horizontal distance from a vertical axis through the suspension point changes the estimated centre of gravity above a threshold change. The threshold change may be determined from experiments and/or simulations. Thereby, only manipulations of the 3D model at regions of the 3D model resulting in sufficiently large deviations of the estimated horizontal position of the centre of gravity of the 3D carcass model may be selected for manipulations. The method may forgo manipulating the 3D model in case such a measure is not satisfied. The method may forgo manipulating the 3D model at an identified region in case such a measure is not satisfied for the identified region; and try another identified region.

In case the suspension position is determined only in a lateral direction or only a transverse direction, the method may forgo manipulation that changes the estimated centre of gravity in a transverse direction or in a lateral direction, respectively, such as changes the estimated centre of gravity only in a transverse direction.

In some embodiments the method comprises:

- identifying first regions of the 3D carcass model as regions of the 3D carcass model that have a 3D point density that fails to exceed a 3D point density threshold; and wherein the 3D point density threshold is adjusted until a predefined number of first regions are identified;
- determining the respective size of the one or more first regions, and in accordance therewith:

  - forgo manipulation of one or more first regions having a size smaller than a size threshold;
  - determining locations of one ore more first regions at the 3D carcass model with respect to the suspension point e.g. by determining a horizontal position or distance;

    - replacing at least portions of one or more first regions having a size larger than the size threshold and having a location satisfying a first location criteria by a corresponding portion based on a predefined standard 3D carcass model;
    - identifying remaining one or more first regions, which has a size larger than the size threshold and/or having a location satisfying a second location criteria:

      - modifying the 3D carcass model at the remaining one or more first regions with the objective of making the centre of gravity of the 3D carcass model approach or coincide with the suspension position horizontally.

The above may be iterated until a desired number of regions for manipulation have been identified.

One or both of the first location criteria and the second location criteria is/are based on one or more of an estimated position of the centre of gravity of the 3D carcass model and axes of inertia of the 3D carcass model.

The replacing at least portions of one or more first regions having a size larger than the size threshold and having a location satisfying the first location criteria by a corresponding portion based on a predefined standard 3D carcass model may be based on navigation in the 3D carcass model and the predefined standard 3D model as described herein.

An example of the one or more regions having a size larger than the size threshold and having a location satisfying the first location criteria may be the fore quarter or the thoracic cavity of the carcass.

3: Embodiments based on determining a weight of the carcass by a load cell, and based on determining a suspension position in a lateral direction and/or transverse direction:

Such embodiments may have two or three constraints for manipulating the 3D carcass model. This means that two or three regions may be accurately manipulated all other things being equal. The weight as measured by a load cell establishes one constraint and makes it possible to constrain the 3D carcass model irrespective of the location of a first region. Determining the suspension position in a lateral direction and/or transverse direction establishes additional one or two constraints, but usefulness of the additional constraints for modifying the 3D carcass model depends on the location relative to the horizontal location of the suspension point.

The method may be based on additional constraints from a predefined standard 3D model as described herein and/or based on inter-dependence relations between manipulation performed in one region and manipulation performed in another region. An inter-dependence relation may favour or enforce a minimum volume manipulation. In one example an inter-dependence relation may distribute a volume manipulation between multiple identified regions in accordance with a weighted distribution of the volume manipulation.

**Claims**

1. A method of imaging carcasses to generate a manipulated 3D carcass model, comprising:

   acquiring, using a first set of cameras (104), a first set of multi-view images of a suspende carcass from multiple positions at a first side of a passageway, and acquiring, using a second set of cameras (105), a second set of multi-view images of said suspended carcass from multiple positions at a second side of the passageway; wherein the multi-view images are acquired at a first point in time upon detection of a carcass being present at a predetermined position at the passageway;
   computing a 3D carcass model in a 3D domain of the carcass or a portion thereof from the first set of multi-view images and the second set of multi-view images;
   locating a first region of the 3D carcass model by locating an occluded or spatially sparsely represented region of the 3D carcass model; and
   manipulating the 3D carcass model at least at the first region to change the volume of the 3D carcass model or the distribution of volume of the 3D carcass model in accordance with one or both of:

- a weight registered by a load cell and a volume-weight conversion parameter; and
- a representation in the 3D domain of a suspension position at which the carcass is suspended.

2. A method according to claim 1, comprising:

acquiring a weight measurement value from a load cell (109) at which the carcass is weighed; estimating a weight of the carcass from a volumetric computation of the 3D carcass model and a volume-weight conversion parameter; verifying the 3D carcass model or performing the manipulation by manipulating one or both of 3D points and polygons within the first region with the objective of making the estimate of the weight of the carcass correspond to the weight measurement value.

3. A method according to any of the above claims, comprising:

estimating a first horizontal position of a suspension device from which the carcass is suspended with respect to the 3D carcass model; estimating a second horizontal position of a centre of gravity of the 3D carcass model; verifying the 3D carcass model or performing the manipulation by manipulating one or both of 3D points and polygons within the first region with the objective of making the estimate of second horizontal position align with the first horizontal position.

4. A method according to any of the above claims, comprising:

locating the occluded or sparsely represented region of the 3D carcass model as a first region within which a spatial density of points and/or polygons is relatively low compared to another region; and selecting one or both of 3D points and polygons, within the first region, as subjects for manipulation of the 3D carcass model.

5. A method according to any of the above claims, wherein the manipulation of the 3D carcass model further comprises:

computing a geometrical indicator, with respect to the first region, representing a spatial direction indicative of an expansion or reduction of the volume of the 3D carcass model; and performing the manipulation by manipulating one or both of 3D points and polygons within the first region in accordance with the spatial direction.

6. A method according to any of the above claims, comprising:

before performing the manipulation of the 3D carcass model at the first region to scale the volume of the 3D carcass model or the distribution of volume of the 3D carcass model, replacing the first region or a substantive portion thereof by 3D points or polygons arranged on a plane or smoothly curved surface; and connecting the 3D points or polygons arranged on a plane or smoothly curved surface to one or more regions surrounding the first region.

7. A method according to claim 6, comprising: estimating a second curvature of a second region adjoining the first region and manipulating the 3D points and/or polygons within the first region subject to a smoothness criterion enforcing a smooth transition from the second curvature to a first curvature of the first region.

8. A method according to any of the above claims, comprising:

accessing a repository of one or more stored curvatures representing curvature of a surface at a cross-section; and performing the manipulation of the 3D carcass model while constraining the curvature of the first region to adhere to a stored cross-sectional profile.

9. A method according to any of the above claims, comprising:

configuring a cutting machine (1008) on a production line (1016) in accordance with a cutting parameter computed from the 3D carcass model; and identifying a carcass at the cutting machine and cutting the carcass in accordance with the cutting parameter.

10. A method according to any of the above claims, comprising:

grading the carcass based on a quality measure computed from the 3D carcass model; classifying at least one carcass among predefined classes and assigning a classification representation to a carcass record based on the quality measure; and gathering a batch carcasses assigned a predefined classification representation by routing carcasses assigned with the predefined classification representation to a selected facility area among multiple facilities.

11. A computer programme product comprising instructions making a computer system perform the method set out in any of the claims 1-10, 14-16 or 17 when executed by the computer system.

12. A system comprising:

a multi-view imaging camera system comprising a first set of cameras (104) arranged at a first side of a passageway for capturing a first set of multi-view images of a suspended carcass from respective multiple positions, and a second set of cameras (105) arranged at a second side of the passageway for capturing a second set of multi-view images of said suspended carcass from respective multiple positions; and optionally a load cell, and
a computer (1010) programmed to to perform the method set out in any of the claims 1-10, 14-16 or 17

13. A slaughterhouse production line (2016), comprising a system according to claim 12.

14. A method according to claim 1, comprising:

estimating the suspension position at which the carcass is suspended;
estimating one or both of a centre of gravity and a geometric centre of the manipulated 3D carcass model;
wherein the changing the volume of the manipulated 3D carcass model or the distribution of volume of the 3D carcass model is performed with an objective of moving the one or both of a centre of gravity and a geometric centre of the manipulated 3D carcass model towards or to a horizontal position vertically aligned with the suspension position.

15. A method according to claim 14, comprising:

- registering a weight of the carcass by a load cell; and
- manipulating the 3D carcass model at least at the first region to change the volume of the 3D carcass model with the objective of making an estimated weight approach, match or equal the weight of the carcass as registered by the load cell; wherein the estimated weight is based on a volume of the 3D carcass model and a volume-weight conversion parameter.

16. A method according to claim 14 or 15, wherein the locating a first region of the 3D carcass model comprises identifying first regions of the 3D carcass model as regions of the 3D carcass model that have a 3D point density that fails to exceed a 3D point density threshold; and wherein the 3D point density threshold is adjusted until a predefined number of first regions are identified; the method comprising:

- determining the respective size of the one or more first regions, and in accordance therewith:

- forgo manipulation of one or more first regions having a size smaller than a size threshold;
- determining locations of one or more first regions at the 3D carcass model with respect to the suspension point e.g. by determining a horizontal position or distance;
- replacing at least portions of one or more first regions having a size larger than the size threshold and having a location satisfying a first location criteria by a corresponding portion based on a predefined standard 3D carcass model;
- identifying remaining one or more first regions, which has a size larger than the size threshold and/or having a location satisfying a second location criteria:

- modifying the 3D carcass model at the remaining one or more first regions with the objective of making the centre of gravity of the 3D carcass model approach or coincide with the suspension position horizontally.

17. A method according to claim 1, comprising:

- registering a weight of the carcass by a load cell;
- manipulating the 3D carcass model at least at the first region to change the volume of the 3D carcass model with the objective of making an estimated weight approach, match or equal the weight of the carcass as registered by the load cell; wherein the estimated weight is based on a volume of the 3D carcass model and a volume-weight conversion parameter.

**Patentansprüche**

1. Verfahren zur Abbildung von Tierkörpern zum Erzeugen eines manipulierten 3D-Tierkörpermodells, umfassend:

Erlangen, unter Verwendung eines ersten Satzes von Kameras (104), von einem ersten Satz von Multi-View-Bildern eines aufgehängten Tierkörpers von mehreren Positionen an einer ersten Seite eines Durchgangs und Erlangen, unter Verwendung eines zweiten Satzes von Kameras (105), von einem zweiten Satz von Multi-View-Bildern des aufgehängten Tierkörpers von mehreren Positionen an einer zweiten Seite des Durchgangs; wobei die Multi-View-Bilder zu einem Zeitpunkt erlangt werden, wenn es detektiert wird, dass ein Tierkörper in einer vorgegebenen Position am Durchgang vorhanden ist;

Berechnen eines 3D-Tierkörpermodells in einer 3D-Domäne des Tierkörpers oder eines Teils davon aus dem ersten Satz von Multi-View-Bildern und dem zweiten Satz von Multi-View-Bildern;

Lokalisieren eines ersten Bereichs des 3D-Tierkörpermodells durch Lokalisieren eines verdeckten oder räumlich wenig dargestellten Bereichs des 3D-Tierkörpermodells; und

Manipulieren des 3D-Tierkörpermodells zumindest am ersten Bereich zum Verändern des Volumens des 3D-Tierkörpermodells oder der Verteilung des Volumens des 3D-Tierkörpermodells gemäß einem oder beiden von:

- einem Gewicht erfasst von einer Wägezelle und einem Volumen-Gewicht-Umwandlungsparameter; und
- einer Darstellung in der 3D-Domäne einer Aufhängungsposition, in der der Tierkörper aufgehängt ist.

2. Verfahren nach Anspruch 1, umfassend:

Erlangen eines Gewichtsmesswert aus einer Wägezelle (109), bei der der Tierkörper gewogen wird;

Schätzen eines Gewichts des Tierkörpers aus einer volumetrischen Berechnung des 3D-Tierkörpermodells und einem Volumen-Gewicht-Umwand lungsparam eter;

Verifizieren des 3D-Tierkörpermodells oder Ausführen der Manipulation durch Manipulieren von einer oder beiden von 3D-Punkten und Polygonen im ersten Bereich, damit die Schätzung des Gewichts des Tierkörpers dem Gewichtsmesswert entspricht.

3. Verfahren nach einem der vorhergehenden Ansprüche, umfassend:

Schätzen einer ersten horizontalen Position einer Aufhängungsvorrichtung, in der der Tierkörper aufgehängt wird, in Bezug auf das 3D-Tierkörpermodell;

Schätzen einer zweiten horizontalen Position eines Gleichgewichtspunkts des 3D-Tierkörpermodells;

Verifizieren des 3D-Tierkörpermodells oder Ausführen der Manipulation durch Manipulieren von einer oder beiden von 3D-Punkten und Polygonen im ersten Bereich, damit die Schätzung der zweiten horizontalen Position zur ersten horizontalen Position ausgerichtet ist.

4. Verfahren nach einem der vorhergehenden Ansprüche, umfassend:

Lokalisieren des verdeckten oder wenig dargestellten Bereichs des 3D-Tierkörpermodells als ein erster Bereich, worin eine räumliche Dichte von Punkten und/oder Polygonen relativ klein ist verglichen mit einem anderen Bereich; und

Auswählen von einer oder beiden von 3D-Punkten oder Polygonen, im ersten Bereich, als Gegenstand für Manipulation des 3D-Tierkörpermodells.

5. Verfahren nach einem der vorgehenden Ansprüche, wobei die Manipulation des 3D-Tierkörpermodells weiter Folgendes umfasst:

Berechnen eines geometrischen Indikators, bezüglich des ersten Bereichs, der eine räumliche Richtung darstellt, die eine Ausweitung oder Verringerung des Volumens des 3D-Tierkörpermodells angibt; und

Ausführen der Manipulation durch Manipulieren von einer oder beiden von 3D-Punkten und Polygonen im ersten Bereich gemäß der räumlichen Richtung.

6. Verfahren nach einem der vorhergehenden Ansprüche, umfassend:

Ersetzen - vor dem Ausführen der Manipulation des 3D-Tierkörpermodells im ersten Bereich zum Skalieren des Volumens des 3D-Tierkörpermodells oder der Verteilung des Volumens des 3D-Tierkörpermodells - des ersten Bereichs oder eines wesentlichen Teils davon durch 3D-Punkte oder Polygone, die auf einer ebenen oder regelmäßig gekrümmten Oberfläche angeordnet sind; und

Verbinden der 3D-Punkte oder Polygone, die auf einer ebenen oder regelmäßig gekrümmten Oberfläche zu einem oder mehreren Bereichen, die den ersten Bereich umgeben, angeordnet sind.

7. Verfahren nach Anspruch 6, umfassend:
Schätzen einer zweiten Krümmung eines zweiten Bereichs, der an den ersten Bereich angrenzt, und Manipulieren der 3D-Punkte und/oder Polygone im ersten Bereich, unterworfen eines Ebenheitskriteriums, das einen ebenen Übergang von der zweiten Krümmung zur ersten Krümmung des ersten Bereichs durchsetzt.

8. Verfahren nach einem der vorhergehenden Ansprüche, umfassend:

Zugreifen auf einen Speicher von einer oder mehreren gespeicherten Krümmungen, die eine Krümmung einer Oberfläche an einem Querschnitt darstellen; und
Ausführen der Manipulation des 3D-Tierkörpermodells, während die Krümmung des ersten Bereichs eingeschränkt wird zum Anhaften an einem gespeicherten Querschnittsprofil.

9. Verfahren nach einem der vorhergehenden Ansprüche, umfassend:

Konfigurieren einer Schneidmaschine (1008) auf einem Produktionsband (1016) gemäß einem Schneidparameter, berechnet aus dem 3D-Tierkörpermodell; und
Identifizieren eines Tierkörpers an der Schneidmaschine und Schneiden des Tierkörpers gemäß dem Schneidparameter.

10. Verfahren nach einem der vorhergehenden Ansprüche, umfassend:

Graduieren des Tierkörpers basierend auf einem Qualitätsmaß, berechnet aus dem 3D-Tierkörpermodell;
Klassifizieren von mindestens einem Tierkörper unter vorgegebenen Klassen und Zuweisen einer Klassifikationsrepräsentation an eine Tierkörperaufzeichnung basierend auf dem Qualitätsmaß; und
Sammeln einer Partie von Tierkörpern zugeteilt eine vorgegebene Klassifikationsrepräsentation durch Leiten von Tierkörpern, die die vorgegebene Klassifikationsrepräsentation zugeteilt bekommen haben, an einen ausgewählten Bereich unter mehreren Einrichtungen.

11. Computerprogrammprodukt umfassend Anweisungen, die veranlassen, dass ein Computersystem das Verfahren nach einem der Ansprüche 1-10, 14-16 oder 17 ausführt, wenn es durch das Computersystem ausgeführt wird.

12. System umfassend:

ein Multi-View-Bildkamerasystem umfassend einen ersten Satz von Kameras (104), die an einer ersten Seite eines Durchgangs angeordnet sind zum Aufnehmen eines ersten Satzes von
Multi-View-Bildern eines aufgehängten Tierkörpers von jeweiligen mehreren Positionen, und einen zweiten Satz von
Kameras (105), die an einer zweiten Seite des Durchgangs angeordnet sind zum Aufnehmen eines zweiten Satzes von Multi-View-Bildern des aufgehängten Tierkörpers von jeweiligen mehreren Positionen; und eventuell eine Wägezelle, und
einen Computer (1010), der zum Ausführen des Verfahrens nach einem der Ansprüche 1-10, 14-16 oder 17 programmiert ist.

13. Schlachthofproduktionsband (2016) umfassend ein System nach Anspruch 12.

14. Verfahren nach Anspruch 1, umfassend:

Schätzen der Aufhängungsposition, worin der Tierkörper aufgehängt ist;
Schätzen von einem oder beiden von einem Gleichgewichtspunkt und einem geometrischen Zentrum des manipulierten 3D-Tierkörpermodells;
wobei die Änderung des Volumens des manipulierten 3D-Tierkörpermodells oder die Verteilung von Volumen des 3D-Tierkörpermodells mit dem Ziel ausgeführt wird, dass das eine oder beide von einem Gleichgewichtspunkt und einem geometrischen Zentrum des manipulierten 3D-Tierkörpermodells gegen oder in eine horizontale, zur Aufhängungsposition vertikal ausgerichtete Position bewegt wird.

15. Verfahren nach Anspruch 14, umfassend:

- Erfassen eines Gewichts des Tierkörpers durch eine Wägezelle; und
- Manipulieren des 3D-Tierkörpermodells zumindest am ersten Bereich zum Verändern des Volumens des 3D-Tierkörpermodells zum Bereitstellen eines geschätzten Gewichtsansatzes, Anpassen oder Angleichen des Gewichts des Tierkörpers als erfasst durch die Wägezelle; wobei das geschätzte Gewicht auf einem Volumen des 3D-Tierkörpermodells und einem Volumen-Gewicht-Umwandlungsparameter basiert.

16. Verfahren nach Anspruch 14 oder 15, wobei das Lokalisieren eines ersten Bereichs des 3D-Tierkörpermodells das Identifizieren von ersten Bereichen des 3D-Tierkörpermodells als Bereiche des 3D-Tierkörpermodells, die eine 3D-Punktdichte aufweisen, welche eine 3D-Punktdichteschwellenwert nicht übersteigt, umfasst; und wobei der 3D-Punktdichteschwellenwert eingestellt wird, bis eine vorgegebene Anzahl von ersten Bereichen identifiziert sind; welches Verfahren Folgendes umfasst:

- Ermitteln der jeweiligen Größe des einen oder mehrerer ersten Bereichen, und demgemäß:

- Verzichten auf Manipulation des einen oder mehrerer ersten Bereichen mit einer Größe, die kleiner als ein Größenschwellenwert ist;
- Ermitteln von Stellen des einen oder mehrerer ersten Bereichen am 3D-Tierkörpermodell bezüglich des Aufhängungspunkts, z.B. durch Ermitteln einer horizontalen Position oder eines Abstands;

- Ersetzen von zumindest Teilen des einen oder mehrerer ersten Bereichen mit einer Größe, die größer als der Größenschwellenwert ist und einen Standort aufweist, der ein erstes Standortkriterium erfüllt durch einen entsprechenden Teil basierend auf einem vorgegebenen Standard-3D-Tierkörpermodell;
- Identifizieren von dem verbleibenden einen oder mehreren ersten Bereichen mit einer Größe, die größer als der Größenschwellenwert ist und/oder einen Standort aufweist, der ein zweites Standortkriterium erfüllt:

- Verändern des 3D-Tierkörpermodells an dem verbleibenden einen oder mehreren ersten Bereichen, damit der Gleichgewichtspunkt des 3D-Tierkörpermodells sich der Aufhängungsposition nähert oder damit horizontal zusammenfällt.

17. Verfahren nach Anspruch 1, umfassend:

- Erfassen eines Gewichts des Tierkörpers durch eine Wägezelle;
- Manipulieren des 3D-Tierkörpermodells zumindest am ersten Bereich zum Verändern des Volumens des 3D-Tierkörpermodells zum Bereitstellen eines geschätzten Gewichtsansatzes, Anpassen oder Angleichen des Gewichts des Tierkörpers als erfasst durch die Wägezelle; wobei das geschätzte Gewicht auf einem Volumen des 3D-Tierkörpermodells und einem Volumen-Gewicht-Umwandlungsparameter basiert.

**Revendications**

1. Procédé d'imagerie de carcasses pour générer un modèle de carcasse 3D manipulé, comprenant :

l'acquisition, en utilisant un premier ensemble de caméras (104), d'un premier ensemble d'images à vues multiples d'une carcasse suspendue à partir de plusieurs positions au niveau d'un premier côté d'un passage, et l'acquisition, en utilisant un deuxième ensemble de caméras (105), d'un deuxième ensemble d'images à vues multiples d'une carcasse suspendue à partir de plusieurs positions au niveau d'un deuxième côté du passage ; les images à vues multiples étant acquises à un premier instant après la détection d'une carcasse étant présente à une position prédéterminée au niveau du passage ; le calcul d'un modèle de carcasse 3D dans un domaine 3D de la carcasse ou d'une partie de celle-ci à partir du premier ensemble d'images à vues multiples et du deuxième ensemble d'images à vues multiples ; la localisation d'une première région du modèle de carcasse 3D en localisant une région occluse ou spatialement peu représentée du modèle de carcasse 3D ; et la manipulation du modèle de carcasse 3D au moins au niveau de la première région pour changer le volume du modèle de carcasse 3D ou la distribution de volume du modèle de carcasse 3D conformément à l'un ou aux deux :

- d'un poids enregistré par une cellule de pesée et un paramètre de conversion volume-poids; et
- d'une représentation dans le domaine 3D d'une position de suspension à laquelle la carcasse est suspendue.

2. Procédé selon la revendication 1, comprenant :

l'acquisition d'une valeur de mesure de poids à partir d'une cellule de pesée (109) à laquelle la carcasse est pesée ; l'estimation d'un poids de la carcasse à partir d'un calcul volumétrique du modèle de carcasse 3D et d'un paramètre de conversion volume-poids ; la vérification du modèle de carcasse 3D ou la mise en oeuvre de la manipulation en manipulant l'un ou les deux des points et des polygones 3D dans la première région dans le but de faire correspondre l'estimation du poids de la carcasse à la valeur de mesure du poids.

3. Procédé selon l'une quelconque des revendications précédentes, comprenant :

l'estimation d'une première position horizontale d'un dispositif de suspension à partir duquel la carcasse est suspendue par rapport au modèle de carcasse 3D ; l'estimation d'une deuxième position horizontale d'un centre de gravité du modèle de carcasse 3D ;

la vérification du modèle de carcasse 3D ou la mise en oeuvre de la manipulation en manipulant l'un ou les deux des points et des polygones 3D dans la première région dans le but de faire aligner l'estimation de la deuxième position horizontale avec la première position horizontale.

4. Procédé selon l'une quelconque des revendications précédentes, comprenant :

la localisation de la région occluse ou peu représentée du modèle de carcasse 3D en tant que première région à l'intérieur de laquelle une densité spatiale de points et / ou de polygones est relativement faible par rapport à une autre région ; et

la sélection de l'un ou des deux des points et des polygones 3D, dans la première région, en tant que sujets pour la manipulation du modèle de carcasse 3D.

5. Procédé selon l'une quelconque des revendications précédentes, dans lequel la manipulation du modèle de carcasse 3D comprend en outre :

le calcul d'un indicateur géométrique, par rapport à la première région, représentant une direction spatiale indiquant une expansion ou une réduction du volume de la carcasse 3D ; et

la mise en oeuvre de la manipulation en manipulant l'un ou les deux des points et des polygones 3D dans la première région conformément à la direction spatiale.

6. Procédé selon l'une quelconque des revendications précédentes, comprenant :

avant la mise en oeuvre de la manipulation du modèle de carcasse 3D au niveau de la première région pour mettre à l'échelle le volume du modèle de carcasse 3D ou la distribution de volume du modèle de carcasse 3D, le remplacement de la première région ou une partie substantielle de celui-ci par des points ou des polygones 3D disposés sur une surface plane ou doucement incurvée ; et

la liaison des points ou des polygones 3D disposés sur une surface plane ou doucement incurvée à une ou plusieurs régions entourant la première région.

7. Procédé selon la revendication 6, comprenant : l'estimation d'une deuxième courbure d'une deuxième région adjacente à la première région et la manipulation des points et/ ou des polygones 3D dans la première région soumis à un critère de douceur imposant une transition douce à partir de la deuxième courbure à une première courbure de la première région.

8. Procédé selon l'une quelconque des revendications précédentes, comprenant :

l'accès à un référentiel d'une ou plusieurs courbures stockées représentant la courbure d'une surface en coupe transversale ; et

la mise en oeuvre de la manipulation du modèle de carcasse 3D tout en contraignant la courbure de la première région à adhérer à un profil en coupe stocké.

9. Procédé selon l'une quelconque des revendications précédentes, comprenant :

la configuration d'une machine de découpe (1008) sur une ligne de production (1016) conformément à un paramètre de découpe calculé à partir du modèle de carcasse 3D ; et

l'identification d'une carcasse au niveau de la machine de découpe et la découpe de la carcasse conformément au paramètre de découpe.

10. Procédé selon l'une quelconque des revendications précédentes, comprenant :

le classement de la carcasse sur la base d'une mesure de qualité calculée à partir du modèle de carcasse 3D ;

le classement d'au moins une carcasse parmi des classes prédéfinies et l'attribution d'une représentation de classification à un enregistrement de carcasse sur la base de la mesure de qualité ; et

le rassemblement d'un lot de carcasses auxquelles une représentation de classification prédéfinie a été attribuée en acheminant les carcasses attribuées avec la représentation de classification prédéfinie à une zone d'installation sélectionnée parmi plusieurs installations.

11. Produit de programme informatique comprenant des instructions amenant un système informatique à mettre en oeuvre le procédé défini selon l'une quelconque des revendications 1 à 10, 14 à 16 ou 17, lorsqu'il est exécuté par le système informatique.

12. Système comprenant :

un système de caméra d'imagerie à vues multiples comprenant un premier ensemble de caméras (104) disposées au niveau d'un premier côté d'un passage pour capturer un premier ensemble d'images à vues multiples d'une carcasse suspendue à partir de plusieurs positions respectives, et un deuxième ensemble de caméras (105) disposées au niveau d'un deuxième côté du passage pour capturer un deuxième ensemble d'images à vues multiples de ladite carcasse suspendue à partir de multiples positions respectives ; et éventuellement une cellule de pesée, et

un ordinateur (1010) programmé pour mettre en œuvre le procédé selon l'une quelconque des revendications 1 à 10, 14 à 16 ou 17

**13.** Ligne de production d'abattoir (2016), comprenant un système selon la revendication 12.

**14.** Procédé selon la revendication 1, comprenant :

l'estimation de la position de suspension à laquelle la carcasse est suspendue ;
l'estimation de l'un ou des deux d'un centre de gravité et d'un centre géométrique du modèle de carcasse 3D manipulé ;
dans lequel le changement du volume du modèle de carcasse 3D manipulé ou de la distribution de volume du modèle de carcasse 3D est effectué dans le but de déplacer l'un ou les deux d'un centre de gravité et d'un centre géométrique du modèle de carcasse 3D manipulé vers ou à une position horizontale alignée verticalement avec la position de suspension.

**15.** Procédé selon la revendication 14, comprenant :

- l'enregistrement d'un poids de la carcasse par une cellule de pesée ; et
- la manipulation du modèle de carcasse 3D au moins au niveau de la première région pour changer le volume du modèle de carcasse 3D dans le but de faire une approche, correspondance ou égalisation de poids estimé du poids de la carcasse tel qu'enregistré par la cellule de pesée ; le poids estimé étant basé sur un volume du modèle de carcasse 3D et un paramètre de conversion volume-poids.

**16.** Procédé selon la revendication 14 ou 15, dans lequel la localisation d'une première région du modèle de carcasse 3D comprend l'identification de premières régions du modèle de carcasse 3D en tant que régions du modèle de carcasse 3D qui ont une densité de points 3D qui ne dépasse pas un seuil de densité de points 3D ; et dans lequel le seuil de densité de points 3D est ajusté jusqu'à ce qu'un nombre prédéfini de premières régions soit identifié ; le procédé comprenant :

- la détermination de la taille respective de la ou des premières régions, et conformément à celle-ci :

- le renoncement à la manipulation d'une ou plusieurs premières régions ayant une taille inférieure à un seuil de taille ;
- la détermination des emplacements d'une ou plusieurs premières régions au niveau du modèle de carcasse 3D par rapport au point de suspension, par ex. en déterminant une position horizontale ou une distance ;

- le remplacement au moins de parties d'une ou plusieurs premières régions ayant une taille supérieure au seuil de taille et ayant un emplacement satisfaisant à un premier critère de localisation par une partie correspondante basée sur un modèle de carcasse 3D standard prédéfini ;
- l'identification d'une ou de plusieurs premières régions restantes ayant une taille supérieure au seuil de taille et / ou ayant un emplacement satisfaisant à un deuxième critère d'emplacement :

- la modification du modèle de carcasse 3D au niveau d'une ou de plusieurs premières régions restantes dans le but de faire en sorte que le centre de gravité du modèle de carcasse 3D se rapproche ou coïncide avec la position de suspension horizontalement.

**17.** Procédé selon la revendication 1, comprenant :

- l'enregistrement d'un poids de la carcasse par une cellule de pesée ;
- la manipulation du modèle de carcasse 3D au moins au niveau de la première région pour changer le volume du modèle de carcasse 3D dans le but de faire une approche, correspondance ou égalisation de poids estimé du poids de la carcasse tel qu'enregistré par la cellule de pesée ; le poids estimé étant basé sur un volume du modèle de carcasse 3D et un paramètre de conversion volume-poids.

24

Fig. 1

Fig. 2

Occlusion problem

*Fig. 3*

*Fig. 4*

*Fig. 5*

**614**

Event #1
612

Read weight from load cell
@ID → W1
613

W1

**615**

Trigger Event #3
616

Arm cameras
617

**618**

Trigger Event #2
601

ID
602

Multi-view Image Acquisition
603

3D Point Cloud Construction
604

3D Triangular mesh
constuction       605

Volumetric computation
@ID → V, CoG, W2
606

SP

Volume Manipulation
611

Compensation
607

W1

SP

Ocluded Area Detection
610

(Y)       608

(N)

Store 3D model
@ID → 3D
609

*Fig. 6*

*Fig. 7a*

*Fig. 7b*

*Fig. 8*

*Fig. 9*

*Fig. 10*

*Fig. 11a*

*Fig. 11b*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2092829 A
- US 5194036 A
- CA 2466289

- US 20160029648 A1
- US 7399220 B2
- US 20050128197 A1